(19) Europäisches Patentamt
European Patent Office
Office européen des brevets

(11) Veröffentlichungsnummer: **0 399 279 B1**

(12) # EUROPÄISCHE PATENTSCHRIFT

(45) Veröffentlichungstag der Patentschrift: **13.09.95**

(51) Int. Cl.6: **C07C 69/92**, C07C 69/94, C09K 19/10, G11B 7/24

(21) Anmeldenummer: **90108576.1**

(22) Anmeldetag: **07.05.90**

(54) **Neue Monomere und ihre Verwendung zur Herstellung eines wiederholt löschbaren und beschreibbaren laseroptischen Aufzeichnungselements.**

(30) Priorität: **26.05.89 DE 3917196**

(43) Veröffentlichungstag der Anmeldung:
**28.11.90 Patentblatt 90/48**

(45) Bekanntmachung des Hinweises auf die Patenterteilung:
**13.09.95 Patentblatt 95/37**

(84) Benannte Vertragsstaaten:
**BE DE FR GB NL**

(56) Entgegenhaltungen:
**EP-A- 0 184 482**
**EP-A- 0 231 856**
**DE-A- 2 722 589**
**DE-A- 3 603 267**

(73) Patentinhaber: **BASF Aktiengesellschaft**
**Carl-Bosch-Strasse 38**
**D-67063 Ludwigshafen (DE)**

(72) Erfinder: **Etzbach, Karl-Heinz, Dr.**
**Carl-Bosch-Ring 55**
**D-6710 Frankenthal (DE)**
Erfinder: **Wagenblast, Gerhard, Dr.**
**Hanns-Fay-Strasse 3**
**D-6710 Frankenthal (DE)**
Erfinder: **Brox, Wolfgang, Dr.**
**Im Grund 13**
**D-6900 Heidelberg (DE)**
Erfinder: **Paul, Axel, Dr.**
**Kaefertaler Strasse 38**
**D-6800 Mannheim 1 (DE)**
Erfinder: **Bach, Volker, Dr.**
**Robert-Schuman-Strasse 8**
**D-6730 Neustadt (DE)**

EP 0 399 279 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein neues wiederholt löschbares und beschreibbares laseroptisches Aufzeichnungselement, welches eine Aufzeichnungsschicht mit enantiotropem, ferroelektrischem smektisch flüssigkristallinem ($S_C^*$ ) Verhalten aufweist. Diese Aufzeichnungsschicht kann beim Bestrahlen mit einem Laserstrahl ausreichender Lichtleistung durch Anlegen eines äußeren elektrischen Feldes zwischen zwei thermodynamisch stabilen, optisch unterscheidbaren, ferroelektrischen smektisch flüssigkristallinen $S_C^*$ -Ordnungszuständen hin- und hergeschaltet werden.

Außerdem betrifft die Erfindung neue Monomere I, welche der Herstellung von neuen Polymerisaten mit chiralen mesogenen Seitengruppen mit ferroelektrischem smektisch flüssigkristallinem ($S_C^*$ ) Verhalten dienen.

Des weiteren betrifft die Erfindung die Verwendung dieser neuen Polymerisate zum Aufbau der Aufzeichnungsschichten (a) der neuen wiederholt löschbaren und beschreibbaren laseroptischen Aufzeichnungselemente.

Darüber hinaus betrifft die vorliegende Erfindung ein neues Verfahren für das wiederholte Schreiben, Lesen und Löschen von Daten, bei welchem man das neue wiederholt löschbare und beschreibbare laseroptische Aufzeichnungselement verwendet.

Mesogene Verbindungen, d.h. Verbindungen, die flüssigkristallines Verhalten zeigen, können flüssigkristalline Phasen bilden. Dies sind optisch anisotrope Flüssigkeiten, welche im Gegensatz zu normalen Flüssigkeiten eine Fernordnung ihrer Moleküle aufweisen. Beim Schmelzen einer festen mesogenen Verbindung bildet sich daher zunächst eine flüssigkristalline Phase, z.B. eine smektische, die bei weiterer Temperaturerhöhung bei einer bestimmten Phasenübergangstemperatur entweder in eine weitere, z.B. eine nematisch flüssigkristalline Phase, oder in die optisch isotrope Schmelze übergeht. Kühlt man letztere wieder ab, so bilden sich bei den entsprechenden Umwandlungstemperaturen die flüssigkristallinen Phasen und letztlich der kristalline Zustand wieder aus. Bei Polymeren mit mesogenen Seitengruppen, d.h. Gruppen, die sich von mesogenen Verbindungen ableiten, ist es indes möglich, den einmal erzeugten flüssigkristallinen Zustand beim Abkühlen einzufrieren, wenn man die flüssigkristalline Polymerschmelze unter eine bestimmte Temperatur, z.B. die Glastemperatur $T_g$ des Polymeren, abkühlt, so daß ein optisch anisotroper Festkörper resultiert, der indes nicht kristallin, sondern glasförmig ist.

Flüssigkristalline Phasen können in Schmelzen oder in eingefrorenem Zustand leicht anhand ihrer optischen Anisotropie nachgewiesen werden. So zeigen sie beispielsweise unter dem Polarisationsmikroskop bei gekreuzten Polarisatoren doppelbrechende Texturen, wogegen isotrope Schmelzen hierbei dunkel erscheinen.

Man kann daher Schichten, welche mesogene Verbindungen enthalten, zur Informationsaufzeichnung verwenden, indem man durch lokales Erhitzen in solchen Schichten Bereiche mit veränderten optischen Eigenschaften erzeugt. Diese Bereiche können nach dem Abkühlen, sofern sie dann stabil sind, nachgewiesen, d.h. "gelesen" werden.

Flüssigkristalline Phasen lassen sich grob in nematische, smektische und cholesterische Phasen einteilen. Hierbei sind in einer nematisch flüssigkristallinen Phase die Schwerpunkte der Moleküle unregelmäßig verteilt, indes existiert eine Vorzugsrichtung, in welcher die Moleküllängsachsen der mesogenen Verbindungen ausgerichtet sind. Eng verwandt mit der nematischen ist die cholesterisch flüssigkristalline Phase. Hierin sind die mesogenen Verbindungen in Mikroschichten angeordnet, wobei sich in einer einzelnen Mikroschicht die Moleküllängsachsen nach einer bestimmten Vorzugsrichtung einheitlich ausrichten. Beim Übergang von einer Mikroschicht zur nächsten ändert sich indes die Vorzugsrichtung der Orientierung stetig in einem Drehsinn, so daß insgesamt eine schraubenförmige, helixartige Struktur der cholesterisch flüssigkristallinen Phase resultiert. Bei der smektisch flüssigkristallinen Phase werden die mesogenen Verbindungen durch die intermolekularen Wechselwirkungen insgesamt parallel ausgerichtet und zu Mikroschichten zusammengefügt, welche mit jeweils gleichen Abständen übereinander gestapelt sind.

Im allgemeinen wird eine smektisch flüssigkristalline Phase oder das smektisch flüssigkristalline Verhalten mit "S" und eine cholesterisch flüssigkristalline Phase oder das cholesterisch flüssigkristalline Verhalten mit "N*" gekennzeichnet. Wenn die mesogenen Verbindungen ein chirales, d.h. optisch aktives Zentrum enthalten, aufgrund dessen sich optisch aktive flüssigkristalline Phasen bilden können, wird dies hier und im allgemeinen durch "*" an der betreffenden Kennzeichnung oder an dem betreffenden optisch aktiven Zentrum in der chiralen mesogenen Verbindung symbolisiert.

Neuerdings haben ferroelektrische smektisch flüssigkristalline Phasen eine besondere anwendungstechnische Bedeutung erlangt. Diese Phasen weisen in Abwesenheit eines äußeren elektrischen Feldes eine elektrische Spontanpolarisation auf, wobei diese Polarisation durch Anlegen eines äußeren elektrischen

Feldes umorientiert werden kann, weswegen man diese Phasen folgerichtig als "ferroelektrisch" bezeichnet.

Ein typisches Beispiel für solche ferroelektrische smektisch flüssigkristalline Phasen ist die $S_C^*$ -Phase. Hierin liegt der für smektisch flüssigkristalline Phasen typische Mikroschichtaufbau vor, wobei in den einzelnen Mikroschichten die Moleküllängsachsen der chiralen mesogenen Verbindungen einen Tiltwinkel $\Theta$ von $+\alpha$ oder $-\alpha$ gegenüber der Schichtnormalen Z aufweisen. Die Richtung der Neigung oder des Tilts der Moleküllängsachsen in einer Mikroschicht gegenüber der Schichtnormalen Z wird durch den Direktor $\vec{n}$ -gekennzeichnet. Insgesamt sollte die Ausrichtung der einzelnen lateralen Dipole der chiralen mesogenen Verbindungen zu einem makroskopischen Dipolmoment führen. Indessen führt im allgemeinen der Direktor $\vec{n}$ in der $S_C^*$ -Phase, sofern diese räumlich nicht begrenzt ist, beim Durchgang durch die einzelnen Mikroschichtebenen eine Präzessionsbewegung um die Normale Z aus, d.h. der sog. Polarisationsvektor $\vec{P}$, welcher die Richtung des Gesamtdipolmoments der Phase angibt, läuft auf einer Helix durch die $S_C^*$ -Phase, wodurch ein Gesamtdipolmoment von 0 resultiert.

Wird indes eine solche ferroelektrische smektisch flüssigkristalline $S_C^*$ -Phase in ihrer Dicke begrenzt und entweder in einem äußeren elektrischen Feld des geeigneten Vorzeichens und der geeigneten Ausrichtung erwärmt oder einem sehr starken äußeren elektrischen Feld des geeigneten Vorzeichens und der geeigneten Ausrichtung ausgesetzt, so kann beim überschreiten einer von der jeweils verwendeten chiralen mesogenen Verbindung abhängigen Schwellenenergie die Richtung der Polarisation in der $S_C^*$ -Phase reorientiert werden, so daß ihr Polarisationsvektor $\vec{P}$ mit dem äußeren elektrischen Feld wieder übereinstimmt. Diese Reorientierung der Polarisation beruht auf dem "Umkippen" der Moleküllängsachsen der chiralen mesogenen Verbindungen vom Tiltwinkel $\Theta$ von $+\alpha$ in den Tiltwinkel $\Theta$ von $-\alpha$ oder umgekehrt. Hierdurch bildet sich ein neuer ferroelektrischer smektisch flüssigkristalliner $S_C^*$ -Ordnungszustand in der Phase aus, welcher von dem ersten Zustand optisch unterschieden werden kann. Sind diese beiden optisch unterscheidbaren, ferroelektrischen smektisch flüssigkristallinen $S_C^*$ -Ordnungszustände thermodynamisch stabil, spricht man von enantiotropem, ferroelektrischem smektisch flüssigkristallinem $S_C^*$ -Verhalten. Da hierbei das "Umkippen" der Moleküllängsachsen der chiralen mesogenen Moleküle auf einer Kegelbahn erfolgt, vollzieht sich der Wechsel zwischen diesen beiden $S_C^*$ -Ordnungszuständen sehr rasch, weswegen denn auch die Schaltzeit $\tau$ für das Hin- und Herschalten der $S_C^*$ -Phase zwischen diesen beiden $S_C^*$ -Ordnungszuständen ausgesprochen niedrig ist.

Bekanntermaßen ist dieses Verhalten dann besonders ausgeprägt, wenn die chiralen mesogenen Verbindungen in einer Schicht vorliegen, deren Dicke d geringer ist als die Ganghöhe G der Helix, längs derer der Direktor $\vec{n}$ seine Präzessionsbewegung durch die $S_C^*$ Phase vollführt. In einer solchen makroskopischen Schicht wird die durch die Präzessionsbewegung des Direktors $\vec{n}$ beschriebene Helix sozusagen spontan "aufgewunden", so daß die chiralen mesogenen Moleküle nur noch zwei Möglichkeiten haben, sich zu orientieren.

Es ist bekannt, diese makroskopischen Schichten, welche enantiotropes, ferroelektrisches smektisch flüssigkristallines ($S_C^*$ ) Verhalten zeigen, als Aufzeichnungsschichten in wiederholt löschbaren und beschreibbaren laseroptischen Aufzeichnungselementen zu verwenden.

So geht aus der GB-A-2 181 263 ein laseroptisches Aufzeichnungselement hervor, dessen ferroelektrische smektisch flüssigkristalline ($S_C^*$ ) Aufzeichnungsschicht nicht dicker als 3,5 $\mu$m, insbesondere 2,5 $\mu$m, ist und zwischen einer Frontplatte und einer rückwärtigen Platte eingeschlossen ist. Die Frontplatte ist optisch transparent und trägt auf ihrer der Aufzeichnungsschicht zugekehrten Seite eine transparente Elektrodenschicht. Die rückwärtige Platte ist elektrisch leitfähig und nicht optisch transparent. Auf ihrer der Aufzeichnungsschicht zugekehrten Seite weist sie eine photoleitfähige Schicht auf, deren Dunkelleitfähigkeit durch ihren Schichtdurchmesser hindurch derjenigen der Aufzeichnungsschicht entspricht. Diese photoleitfähige Schicht kann mit einer Elektrodenschicht unterlegt sein oder die rückwärtige Platte kann selbst elektrisch leitfähig sein. Die unmittelbar an die Aufzeichnungsschicht angrenzenden Oberflächen sind von solcher Beschaffenheit, daß sie in der Aufzeichnungsschicht eine homeotrope Orientierung der chiralen mesogenen Verbindungen bewirken. Durch den Einbau der photoleitfähigen Schicht wird zum einen die Absorption des durch die optisch transparente Frontplatte eingestrahlten Laserlichts und seine Umsetzung in Wärmeenergie verbessert, zum anderen wird die photoleitfähige Schicht in den bestrahlten Stellen elektrisch leitfähig, wodurch das zwischen den beiden Platten anliegende elektrische Feld an diesen Stellen lokal soweit verstärkt wird, daß die Schwellenenergie für den Übergang zwischen den beiden thermodynamisch stabilen (enantiotropen), optisch unterscheidbaren, ferroelektrischen smektisch flüssigkristallinen $S_C^*$ -Ordnungszuständen der Aufzeichnungsschicht überschritten wird. In der GB-A-21 81 263 wird allerdings nicht angegeben, welche chiralen mesogenen Verbindungen angewendet werden sollen.

Aus der US-A-4 752 820 geht ein laseroptisches Aufzeichnungselement des vergleichbaren Aufbaus hervor. Seine Aufzeichnungsschicht besteht im wesenlichen aus niedermolekularen chiralen mesogenen Verbindungen mit ferroelektrischem smektisch flüssigkristallinem ($S_C^*$ ) Verhalten und dichroitischen Farb-

stoffen, welche die Absorption des eingestrahlten Laserlichts durch die Aufzeichnungsschicht verbessern. Ein solches laseroptisches Aufzeichnungselement geht außerdem aus der EP-A-0 205 187 hervor.

Außerdem gehen Verfahren für das wiederholte Schreiben, Lesen und Löschen von Daten, welche mit Hilfe von ferroelektrischen smektisch flüssigkristallinen ($S_C^*$ ) Aufzeichnungsschichten durchgeführt werden, in ihren Grundzügen aus der GB-A-2 181 263, der US-A-4 752 820 und der EP-A-0 205 187 hervor.

Nachteilig für die bislang bekannten wiederholt löschbaren und beschreibbaren laseroptischen Aufzeichnungselemente und die hiermit ausgeführten Verfahren ist die Instabilität ihrer niedermolekulare chirale mesogene Verbindungen enthaltenden Aufzeichnungsschicht gegenüber Fliehkräften, wie sie üblicherweise beim schnellen Drehen laseroptischer Datenplatten (Disks) auftreten. Diese Instabilität hat zur Folge, daß die Ordnung in der beschriebenen Aufzeichnungsschicht bei zu schnellem Drehen der laseroptischen Datenplatte gestört werden kann, was naturgemäß zum Verlust von Daten und/oder zu Fehlinformationen führt. Um dies zu verhindern, sind entweder zusätzliche Maßnahmen zur Stabilisierung der Aufzeichnungsschicht zu treffen, oder die betreffenden bekannten laseroptischen Datenplatten können nur bei geringen Umdrehungsgeschwindigkeiten beschrieben, gelesen und ggf. wieder gelöscht werden. Dies ist indes für die Praxis, bei welcher es insbesondere auf schnelle Verarbeitung von und schnellen Rückgriff auf Daten ankommt, besonders nachteilig. Außerdem gehen mit der Verwendung niedermolekularer chiraler mesogener Verbindungen die Nachteile der weitgehend fehlenden Einfrierbarkeit des Ordnungszustandes der thermisch veränderten Bereiche und der Diffusion zwischen den thermisch veränderten und nicht veränderten Bereichen einher, was beides zu dem vergleichsweise raschen Verlust von Daten beiträgt.

Auch chirale mesogene Monomere mit ferroelektrischem smektisch flüssigkristallinem ($S_C^*$ ) Verhalten und hieraus hergestellte Polymerisate mit chiralen mesogenen Seitengruppen, welche gleichfalls ferroelektrisches smektisch flüssigkristallines ($S_C^*$ ) Verhalten zeigen, sind bekannt.

Aus der EP-A-0 184 482 gehen chirale mesogene Monomere mit ferroelektrischen smektisch flüssigkristallinen ($S_C^*$ ) Eigenschaften hervor, welche durch die allgemeine Formel II beschrieben werden,

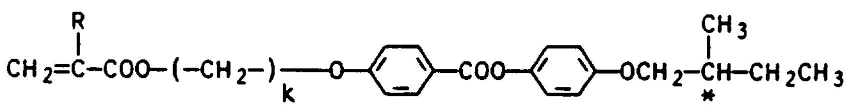 (II)

worin der Rest R eine Methylgruppe oder ein Chlor- oder ein Wasserstoffatom bedeutet und der Index k eine ganze Zahl von 2 bis 11 ist.

Die hieraus herstellbaren Polyacrylate, -methacrylate- und -α-chloracrylate werden auf Seite 9, Zeile 7, bis Seite 10, Zeile 19, der EP-A-0 184 482 aufgelistet.

Außerdem werden Copolymerisate der o.g. Monomere mit Comonomeren, welche nematisch flüssigkristalline Eigenschaften haben, beschrieben wie

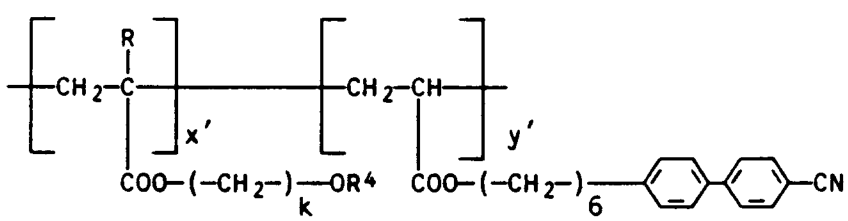 ,

worin der Rest $R^4$ die Gruppe

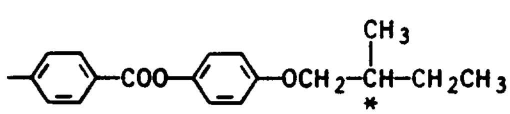

und der Index k eine ganze Zahl von 2 bis 11 bedeuten, und die Summe der Indices x' und y' gleich 1 ist.

Des weiteren werden Copolymerisate der o.g. Monomere untereinander beschrieben.

Im Detail charakterisiert werden

- Polymerisate, worin der Rest R eine Methylgruppe bedeutet und der Index k für 2 oder 11 steht;
- Polymerisate, worin der Rest R ein Wasserstoffatom bedeutet und der Index k für 2 oder 11 steht;

- Polymerisate, worin der Rest R ein Chloratom bedeutet und der Index k gleich 6 ist;
- Copolymerisate, worin der Rest R für eine Methylgruppe steht, der Index k gleich 11 ist, der Rest $R^4$ die vorstehend angegebene Bedeutung hat und worin die Indices x' und y' gleich 0,5 sind oder worin der Index x' gleich 0,05 und der Index y' gleich 0,95 ist;
  und
- Methacrylat-Acrylat-Copolymerisate der Zusammensetzung

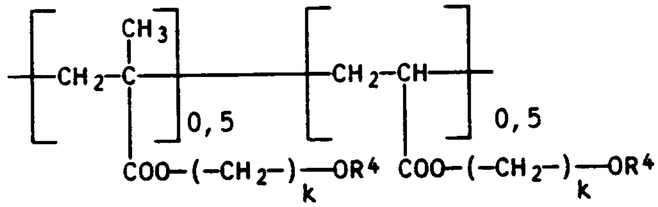

worin der Rest $R^4$ die vorstehend angegebene Bedeutung hat.

Was den Verwendungszweck dieser Polymerisate betrifft, so wird lediglich angegeben, daß sie zu Display-Zwecken oder zu Zwecken der Datenspeicherung verwendet werden können. Wie dies im einzelnen geschehen soll, wird indes nicht angegeben.

Aus der EP-A-0 228 703 gehen chirale mesogene Monomere mit ferroelektrischem smektisch flüssigkristallinem ($S_C^*$ ) Verhalten und hieraus hergestellte Polymerisate, welche demgemäß chirale mesogene Seitengruppen mit ferroelektrischem smektisch flüssigkristallinem ($S_C^*$ ) Verhalten aufweisen, hervor.

Diese Polymerisate enthalten in ihrer Polymerisathauptkette die wiederkehrenden Einheiten der allgemeinen Formel III auf

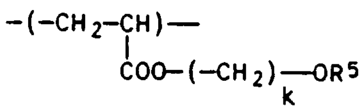 (III).

Hierin bedeutet der Index k eine ganze Zahl von 1 bis 30. Der Rest $R^5$ bezeichnet die Gruppen

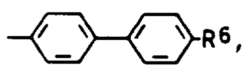

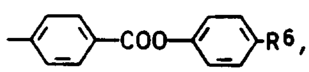

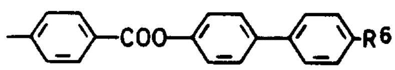 oder

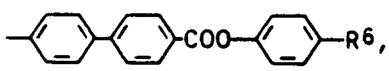

wobei der Rest $R^6$ für die Gruppen

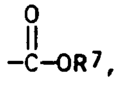 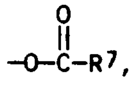

-$OR^7$ oder $R^7$ steht.

Der Rest $R^7$ selbst bedeutet eine Gruppe der allgemeinen Formel IV,

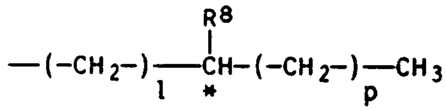 (IV),

worin der Rest $R^8$ für eine Methylgruppe oder ein Chloratom steht, der Index 1 gleich 0 ist oder eine ganze Zahl von 1 bis 10, und der Index p gleich 0 ist oder eine ganze Zahl von 1 bis 10, wobei p nicht 0 sein darf, wenn $R^8$ eine Methylgruppe bezeichnet.

Gemäß den Beispielen wurden im einzelnen die folgenden Polymerisate aus den jeweils zu verwendenden Acrylaten hergestellt und charakterisiert:

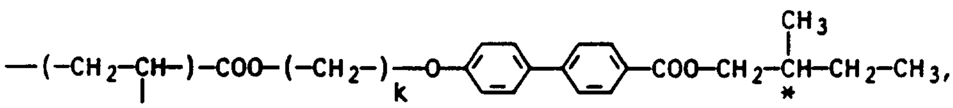

worin der Index k für 2, 6, 10, 12, 14, 16 und 20 steht;

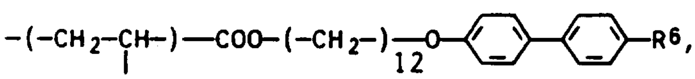

worin der Rest $R^6$ für die Gruppen

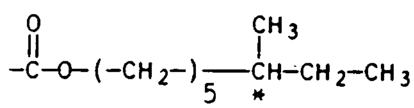 ,

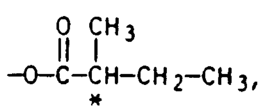

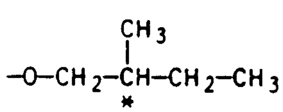 und

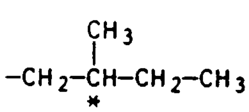

steht;

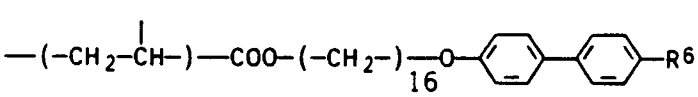 ,

worin der Rest $R^6$ für die Gruppen

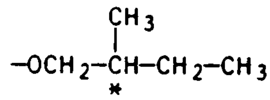 und

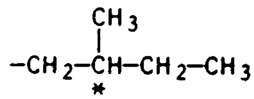

steht;

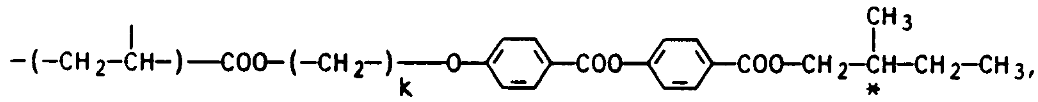

worin der Index k gleich 12, 14 oder 16 ist;

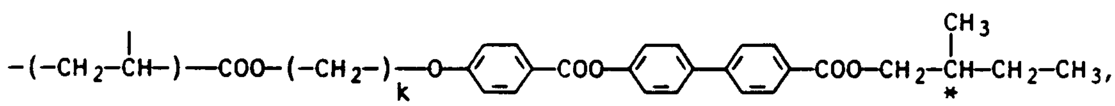

worin der Index k gleich 6, 10, 12, 14, 15 oder 16 ist;

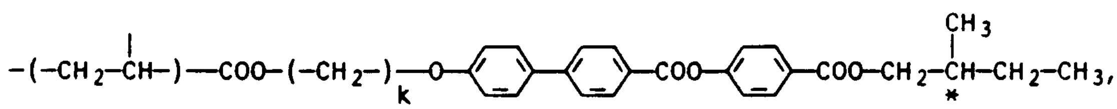

worin der Index k gleich 12 und 16 ist;

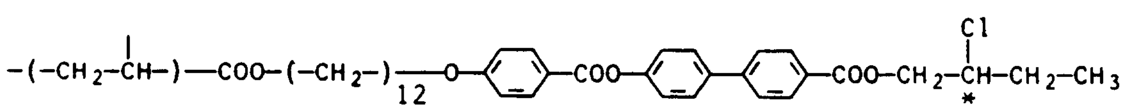

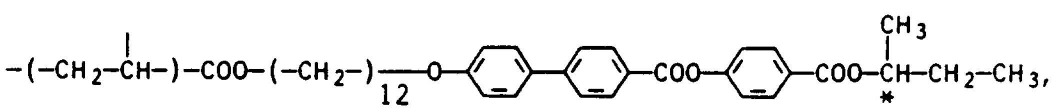

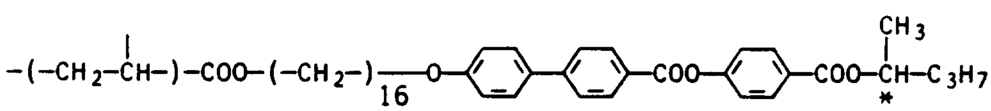 und

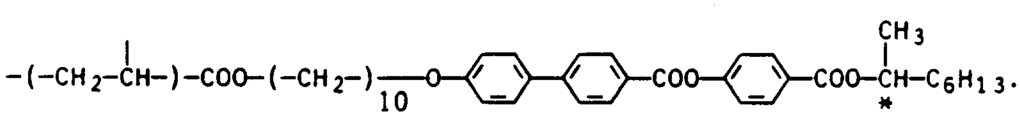

Es wird ferner angegeben, daß diese Polymerisate auf den Gebieten der integrierten Optik, der Optoelektronik und der Datenspeicherung verwendet werden können, wobei die Verwendung in optoelektronischen Geräten wie Displays, optoelektronischen "Shutters", optoelektronischen Schaltern in optischen Kommunikationssystemen, optoelektronischen Diaphragmen, Gedächtniselementen, optischen Modulatoren,

Druckerköpfen und multifokalen Linsen beispielhaft und kursorisch genannt werden. Dagegen wird nicht angegeben, wie die Datenspeicherung im einzelnen ausgeführt werden soll.

Aus der EP-A-0 258 898 gehen Polykondensate hervor, welche unter die allgemeine Formel V fallen:

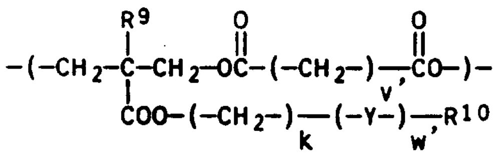
(V)

worin der Rest $R^9$ ein Wasserstoffatom oder eine Methyl- oder Ethylgruppe bezeichnet, der Index v' für eine ganze Zahl von 1 bis 20 und der Index k für eine ganze Zahl von 1 bis 30 steht, die zweibindige Gruppe Y eine Ether- oder eine Carboxygruppe -(-COO)- bedeutet der Index w' gleich 0 oder 1 ist und worin der Rest $R^{10}$ die Gruppen

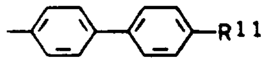
,

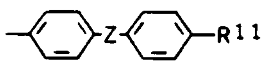
,

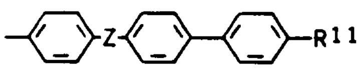
oder

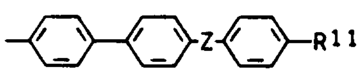

bezeichnet.

In den Resten $R^{10}$ bedeutet die zweibindige Gruppe Z eine Carboxygruppe

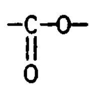
oder
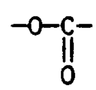

und die Reste $R^{11}$ stehen für die Gruppen -COOC, -OC, -COC oder -C.

Die Variablen oder Gruppen C selbst werden durch die allgemeine Formel VI beschrieben

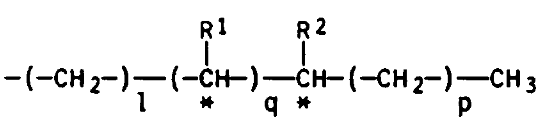
(VI)

worin der Rest $R^2$ eine Methyl- oder eine Cyangruppe oder ein Halogenatom bezeichnet, die Indices l und p unabhängig voneinander ganze Zahlen von 0 bis 10 sind, mit der Maßgabe, daß der Index nicht 0 sein darf, wenn der Rest $R^2$ eine Methylgruppe ist; der Index q 0 oder 1 ist und $R^1$ ein Halogenatom darstellt.

Allerdings handelt es sich bei diesen Polykondensaten nicht um Polymerisate, welche durch die thermisch initiierte radikalische Polymerisation hergestellt wurden, sondern um Polyester, welche nach den üblichen und bekannten Polykondensationsmethoden erhalten wurden.

Im einzelnen wurden Polyester hergestellt und charakterisiert, welche die folgenden Seitengruppen mit ferroelektrischem smektisch flüssigkristallinem ($S_C^*$) Verhalten aufwiesen:

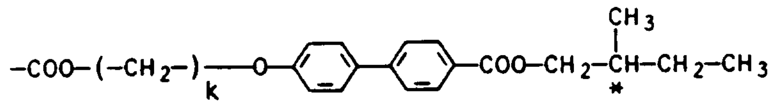

mit k gleich 10 oder 12;

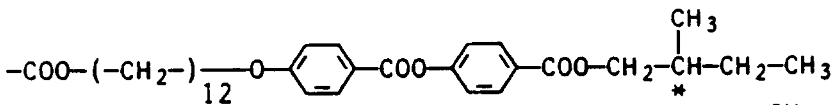,

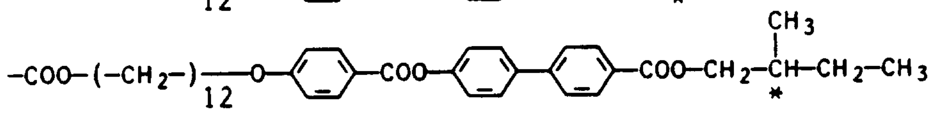,

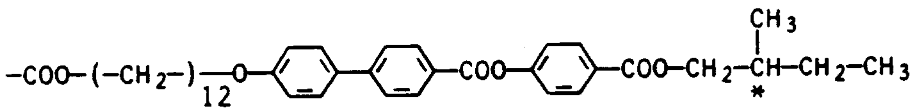,

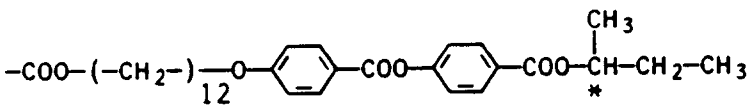,

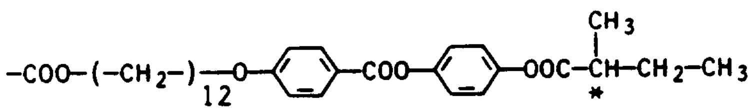,

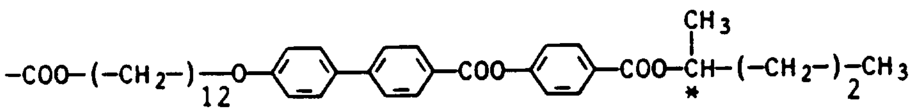,

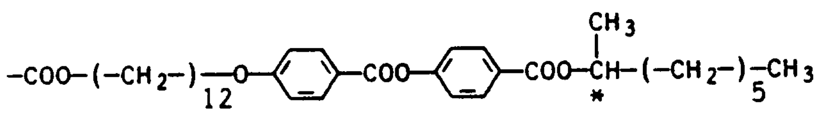,

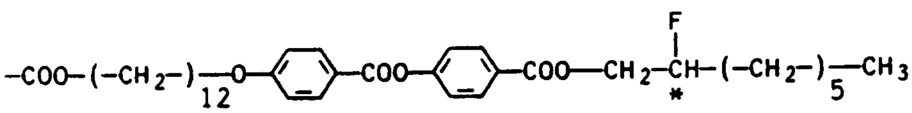,

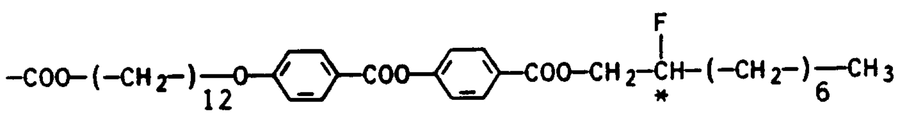,

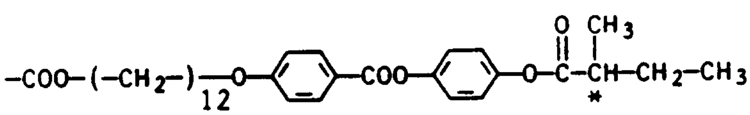,

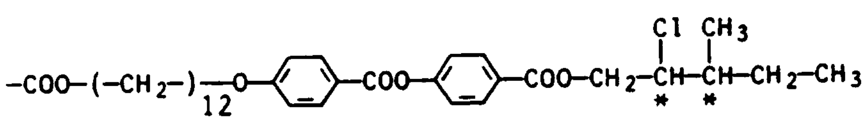,

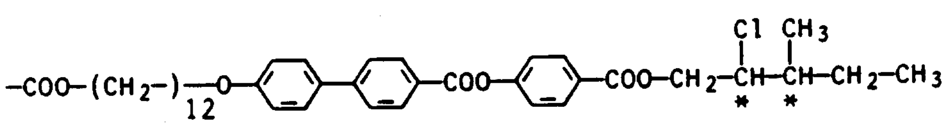

und

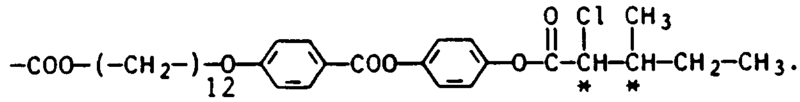

Die Polymerisate werden für die selben Verwendungszwecke vorgeschlagen, wie sie in der EP-A-0 228 703 angegeben sind, wobei die Verwendungszwecke auch hier nur kursorisch gestreift werden.

In den Offenlegungsschriften DE-A-36 03 267 (EP-A-0 231 858) und DE-A-36 03 268 (EP-A-0 231 857) werden Vorrichtungen, d.h. laseroptische Aufzeichnungselemente, und Verfahren zur reversiblen optischen Datenspeicherung, d.h. zum wiederholten Schreiben, Lesen und Löschen von Daten, beschrieben. Bei diesen Verfahren werden Vorrichtungen verwendet, welche $10^{-6}$ bis $10^{-3}$ m dicke Aufzeichnungsschichten aus Polymerisaten mit smektogenen Seitengruppen, d.h. Seitengruppen mit smektisch flüssigkristallinem Verhalten, umfassen. In den Offenlegungsschriften wird ferner angegeben, daß hierzu unter anderem auch die Polymerisate verwendet werden können, welche aus den Monomeren der allgemeinen Formel VII hergestellt werden.

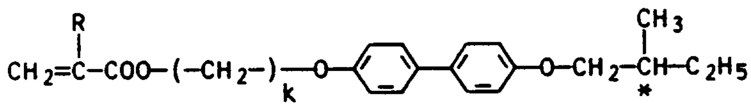 (VII)

Hierin steht der Rest R für eine Methylgruppe oder ein Wasserstoffatom und der Index k biezeichnet eine ganze Zahl von 1 bis 14. Es bleibt allerdings offen, welches Eigenschaftsprofil die Polymerisate XX überhaupt haben, denn anstelle von konkreten Eigenschaftsangaben wird in den Offenlegungsschriften auf den Artikel von V.P. Shibaev et al. in European Polymer Journal, Band 18, Seiten 651 und folgende, aus dem Jahre 1982 und auf den Artikel von N.A. Plate et al. in Journal of Polymer Science, Polymer Symposia (IUPAC 1978), Band 67, Seiten 1 und folgende, aus dem Jahre 1980 hingewiesen, aus denen indes weder die Monomeren XX noch die Polymerisate XX hervorgehen. Es ergeben sich somit aus der DE-A-36 03 267 und der DE-A-36 03 268 keinerlei Hinweise darauf, wie ein reversibles laseroptisches Aufzeichnungselement auszulegen ist, damit es sehr kurze Schaltzeiten hat, und welche Monomeren und Polymerisate hierfür überhaupt in Betracht kommen.

Aus der EP-A-0 271 900 geht ein wiederholt löschbares und beschreibbares laseroptisches Aufzeichnungselement hervor, dessen Aufzeichnungsschicht mit enantiotropem, ferroelektrischem smektisch flüssigkristallinem ($S_{C^*}$) Verhalten c.a. 3µm dick ist und aus dem an sich bekannten Polymerisat

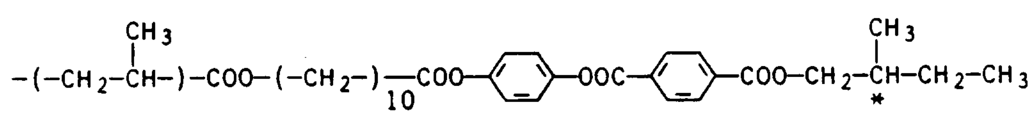

mit der Glastemperatur $T_G$ von 30 °C besteht.

Des weiteren sind aus der EP-A- 0 274 128 Polyether der allgemeinen Formel VIII bekannt,

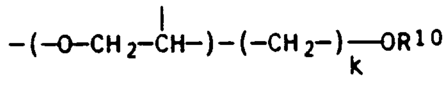 (VIII),

worin $R^{10}$ die bei der allgemeinen Formel XIX angegebene Bedeutung hat. Die Polyether sollen sich für die Wiedergabe von Filmen auch auf großen oder gebogenen Bildschirmen (Displays) eignen.

Die bislang bekannten Polymerisate mit chiralen mesogenen Seitengruppen, welche ferroelektrisches smektisch flüssigkristallines ($S_C^*$ ) Verhalten zeigen, weisen indes noch immer ein Eigenschaftsprofil auf, das ihre Anwendung in Aufzeichnungsschichten von wiederholt löschbaren und beschreibbaren laseroptischen Aufzeichnungselementen noch immer erschwert oder gar verhindert. Entweder lassen sich die chiralen mesogenen Seitengruppen der bekannten Polymerisate über die gesamte Aufzeichnungsschicht hinweg

nicht einheitlich orientieren, oder sie weisen Phasenübergänge in einem Temperaturbereich auf, welcher nicht praxisgerecht ist. Häufig kann der beim Erwärmen der Polymerisate sich einstellende flüssigkristalline Ordnungszustand der chiralen mesogenen Seitengruppen bei Raumtemperatur nicht glasartig eingefroren werden, oder aber es wird bei Raumtemperatur ein nicht erwünschter flüssigkristalliner Ordnungszustand eingefroren. Letzteres tritt insbesondere dann ein, wenn die chiralen mesogenen Seitengruppen beim Erwärmen und dem nachfolgenden Abkühlen der Polymerisate flüssigkristalline Phasen durchlaufen, welche hinsichtlich der Reihenfolge ihres Auftretens nicht auf den in Rede stehenden Verwendungszweck abgestimmt sind. So kann es durchaus vorkommen, daß beim Abkühlen der Aufzeichnungsschicht anstelle des erwünschten $S_C^*$ -Ordnungszustandes ein sonstiger smektisch oder cholesterisch flüssigkristalliner Ordnungszustand oder gar der ungeordnete isotrope Zustand bei Raumtemperatur glasartig eingefroren wird. Bisweilen weisen die bekannten Polymerisate bzw. deren chirale mesogene Seitengruppen eine zu hohe Rotationsviskosität [$\epsilon_{rot}$] und/oder ein zu niedriges Dipolmoment auf, wodurch eine Schaltzeit $\tau$ resultiert, welche für die Praxis zu lang ist. Ferner kommt es des öfteren zu einer thermischen Zersetzung der Polymerisate durch das eingestrahlte Laserlicht, noch bevor sie ihren Klärpunkt, d.h., noch bevor die chiralen mesogenen Seitengruppen ihre isotrope I-Phase erreicht haben.

Folgt man den Vorschlägen der EP-A-0 184 482, der EP-A-0 228 703, der EP-A-0 258 898, der DE-A-36 03 267, der DE-A-36 03 268 oder der EP-A-0 271 900 und verwendet die bislang bekannten Polymerisate mit chiralen mesogenen Seitengruppen zu Zwecken der Datenspeicherung mit Hilfe wiederholt löschbarer und beschreibbarer laseroptischer Aufzeichnungselemente, dann machen sich ihre genannten Nachteile in diesen Aufzeichnungselementen besonders deutlich bemerkbar. So lassen sich die betreffenden laseroptischen Aufzeichnungselemente nicht in der raschen und zuverlässigen Weise wiederholt beschreiben, lesen und löschen, wie dies für die Praxis eigentlich erforderliche wäre. Außerdem weisen sie ein schlechtes Signal-Rausch-Verhältnis auf und/oder ihre Langzeitstabilität genügt nicht den Anforderungen. Hieraus folgt zwangsläufig, daß die bislang bekannten wiederholt löschbaren und beschreibbaren laseroptischen Aufzeichnungselemente weiterentwickelt werden müssen, damit sie den stetig wachsenden Anforderungen der Praxis gerecht werden. Indes haben bekanntermaßen bereits geringe Veränderungen in der Molekülstruktur der chiralen mesogenen Seitengruppen der bekannten Polymerisate oftmals eine gravierende Veränderung ihres flüssigkristallinen Verhaltens zur Folge, was die gezielte Weiterentwicklung erheblich erschwert.

Aufgabe der vorliegenden Erfindung ist es, ein neues wiederholt löschbares und beschreibbares laseroptisches Aufzeichnungselement zu finden, welches die Nachteile des Standes der Technik nicht mehr länger aufweist.

Außerdem ist es die Aufgabe der vorliegenden Erfindung, neue Monomere für die Synthese neuer Polymerisate mit chiralen mesogenen Seitengruppen, welche ferroelektrisches smektisch flüssigkristallines ($S_C^*$ ) Verhalten aufweisen, zu finden.

Des weiteren ist es die Aufgabe der vorliegenden Erfindung, neue Polymerisate zu finden, welche sich für die Verwendung in wiederholt löschbaren und beschreibbaren laseroptischen Aufzeichnungselementen eignen.

Überraschenderweise konnte die Aufgabe der vorliegenden Erfindung mit Hilfe eines neuen wiederholt löschbaren und beschreibbaren laseroptischen Aufzeichnungselements gelöst werden, welches eine Aufzeichnungsschicht mit enantiotropem, ferroelektrischem smektisch flüssigkristallinem ($S_C^*$ ) Verhalten umfaßt, wobei die Aufzeichnungsschicht ein Polymerisat mit chiralen mesogenen Seitengruppen enthält oder aus einem solchen Polymerisat besteht. Die chiralen mesogenen Seitengruppen dieses Polymerisats können in einem bestimmten geeigneten Temperaturbereich eine enantiotrope, ferroelektrische smektisch flüssigkristalline $S_C^*$ -Phase bilden, weswegen sie für den in Rede stehenden Verwendungszweck hervorragend geeignet sind.

Zu dieser Lösung haben überraschenderweise die neuen Monomere I beigetragen, mit deren Hilfe sich diese Polymerisate mit chiralen mesogenen Seitengruppen herstellen lassen.

Demnach handelt es sich bei dem Gegenstand der vorliegenden Erfindung um ein wiederholt löschbares und beschreibbares laseroptisches Aufzeichnungselement, welches

a) eine Aufzeichnungsschicht mit enantiotropem, ferroelektrischem smektisch flüssigkristallinem ($S_C^*$ ) Verhalten, die beim Bestrahlen mit einem Laserstrahl ausreichender Lichtleistung durch Anlegen eines äußeren elektrischen Feldes zwischen zwei thermodynamisch stabilen, optisch unterscheidbaren, ferroelektrischen smektisch flüssigkristallinen $S_C^*$ -Ordnungszuständen hin- und hergeschaltet werden kann,

enthält und welches dadurch gekennzeichnet ist, daß seine Aufzeichnungsschicht (a) mindestens ein Polymerisat mit chiralen mesogenen Seitengruppen enthält oder aus mindestens einem dieser Polymerisate besteht, wobei die Polymerisate unter Verwendung der neuen Monomere der allgemeinen Formel I

$$CH_2=\overset{\overset{\displaystyle R}{|}}{C}-COO-A-B-C \qquad (I)$$

worin die Variablen die nachstehend erläuterte Bedeutung haben, und/oder unter Verwendung der neuen Monomere I, welche speziell ausgewählte Molekülteile B in neuartiger Kombination mit ausgewählten Molekülteilen C enthalten, herstellbar sind.

Ein weiterer Gegenstand der vorliegenden Erfindung sind die neuen Polymerisate mit chiralen mesogenen Seitengruppen, welche unter Verwendung der neuen Monomeren I hergestellt und im folgenden mit "P" gekennzeichnet werden.

Darüber hinaus ist ein neues Verfahren für das wiederholte Schreiben, Lesen und Löschen von Daten, welches mit Hilfe des neuen wiederholt löschbaren und beschreibbaren laseroptischen Aufzeichnungsemelents ausgeführt wird, ein weiterer Gegenstand der vorliegenden Erfindung.

Im Hinblick auf den Stand der Technik, die Vielzahl der veränderbaren Parameter und ihrer Variations- und Kombinationsmöglichkeiten sowie im Hinblick auf die bekannte Tatsache, daß bereits geringe Veränderungen in der Molekülstruktur der chiralen mesogenen Seitengruppen von Polymerisaten zu einer gravierenden Veränderung des flüssigkristallinen Verhaltens führen können, war es nicht vorherzusagen, daß die der Erfindung zugrundeliegende Aufgabe durch die neuen Monomere I, die hieraus hergestellten neuen Polymerisate P und durch das neue wiederholt löschbare und beschreibbare laseroptische Aufzeichnungselement mit einer Aufzeichnungsschicht (a), welche die neuen Polymerisate P enthält oder welche aus diesen besteht, gelöst werden konnte.

Im folgenden wird das erfindungsgemäße neue wiederholt löschbare und beschreibbare laseroptische Aufzeichnungselement kurz als "erfindungsgemäßes Aufzeichnungselement" bezeichnet.

Der erfindungswesentliche Bestandteil des erfindungsgemäßen Aufzeichnungselements ist seine neue Aufzeichnungsschicht (a) mit enantiotropem, ferroelektrischem smektisch flüssigkristallinem ($S_C^*$) Verhalten. Die neue Aufzeichnungsschicht (a) kann beim Bestrahlen mit einem Laserstrahl ausreichender Lichtleistung durch Anlegen eines äußeren elektrischen Feldes zwischen zwei thermodynamisch stabilen, optisch unterscheidbaren ferroelektrischen smektisch flüssigkristallinen $S_C^*$ -Ordnungszuständen hin- und hergeschaltet werden.

Hierbei ist es erfindungsgemäß von ganz besonderem Vorteil, wenn nach dem Erwärmen und dem Abkühlen der neuen Aufzeichnungsschicht (a) die beiden lokal vorliegenden, optisch voneinander unterscheidbaren, thermodynamisch stabilen (enantiotropen), ferroelektrischen smektisch flüssigkristallinen $S_C^*$ -Ordnungszustände bei Raumtemperatur glasartig eingefroren werden können.

Dabei ergibt sich für die neue Aufzeichnungsschicht (a) ein zusätzlicher Vorteil, wenn die in ihr enthaltenen chiralen mesogenen Seitengruppen unterhalb 200 °C in die isotrope I-Phase übergehen, d.h., daß sie einen Klärpunkt unterhalb 200 °C haben.

In der neuen Aufzeichnungsschicht (a) sind die Mikroschichtebenen der $S_C^*$ -Phase, welche von den in ihr enthaltenen chiralen mesogenen Seitengruppen gebildet wird, senkrecht zur Ebene der neuen Aufzeichnungsschicht (a) orientiert, was allgemein als homeotrope Orientierung bezeichnet wird. Hierbei sind die Moleküllängsachsen der chiralen mesogenen Seitengruppen in Richtung eines Direktors $\vec{n}$ in einem Tiltwinkel $\Theta$ von $+\alpha$ oder $-\alpha$ gegenüber der Normalen Z der Mikroschichtebenen geneigt. Erfindungsgemäß ist es von Vorteil, wenn der Tiltwinkel $\Theta$ bei +0,5° bis +35°, insbesondere +1° bis +25° oder bei -0,5° bis -35°, insbesondere -1° bis -25°, liegt.

Die neue Aufzeichnungsschicht (a) weist vorteilhafterweise eine ferroelektrische Spontanpolarisation $P_S$ bzw. eine Dipoldichte oder eine Summe der ausgerichteten Dipolmomente pro Volumeneinheit der Aufzeichnungsschicht (a) von 1 bis 300 $nC/cm^2$ auf.

Vorteilhafte neue Aufzeichnungsschichten (a) haben eine Dicke d von 0,1 bis 5 µm. Ist die neue Aufzeichnungsschicht (a) mehr als 5 µm dick, so kann es unter Umständen zu einem Verlust der Bistabilität kommen, wogegen es bei einer Dicke d von < 0,1 µm zu einer Deformation der neuen Aufzeichnungsschicht (a), beispielsweise durch Kapillareffekte, kommen kann. Der Dickenbereich von 0,1 bis 5 µm stellt somit ein Optimum dar, innerhalb dessen die Dicke d der neuen Aufzeichnungsschicht (a) breit variiert und den jeweiligen Anforderungen angepaßt werden kann, welche sich aus dem jeweils gewünschten anwendungstechnischen Eigenschaftsprofil einerseits und den physikalisch chemischen Eigenschaften der jeweils verwendeten Polymerisate P andererseits ergeben.

Besonders vorteilhafte neue Aufzeichnungsschichten (a) haben eine Dicke d von 0,1 bis 2,5, insbesondere 0,1 bis 0,8 µm, wobei der Dickenbereich von 0,2 bis 0,5 µm noch einmal besonders hervorzuheben ist, weil die neuen Aufzeichnungsschichten (a) dieses Dickenbereichs hinsichtlich ihres Schreib-, Lese- und

Löschverhaltens ganz besondere Vorteile zeigen.

Die neue Aufzeichnungsschicht (a) weist bei Temperaturen oberhalb der Raumtemperatur eine Schaltzeit $\tau$ auf, welche unterhalb einer Millisekunde (ms) liegt. Hierbei ist es von besonderem Vorteil, wenn die Schaltzeit $\tau$ der neuen Aufzeichnungsschicht (a) bei einer Temperatur, welche 1 °C unterhalb des Phasenübergangs $S_C^* \rightarrow S_A^*$ liegt, kleiner als 100 Mikrosekunden ($\mu$s) ist. Neue Aufzeichnungsschichten (a), welche Schaltzeiten $\tau$ in dieser Größenordnung aufweisen, werden für den Aufbau der erfindungsgemäßen Aufzeichnungselemente ganz besonders bevorzugt.

Erfindungsgemäß enthält die neue Aufzeichnungsschicht (a) mindestens ein neues Polymerisat P mit chiralen mesogenen Seitengruppen oder sie besteht aus mindestens einem neuen Polymerisat P. Hierbei sind all die neuen Polymerisate P besonders bevorzugt, deren chirale mesogene Seitengruppen zwischen 50 und 140 °C eine enantiotrope, ferroelektrische smektisch flüssigkristalline $S_C^*$ -Phase bilden.

Erfindungsgemäß werden die neuen Polymerisate P unter Verwendung der neuen Monomeren der allgemeinen Formel I

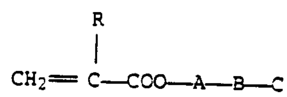

hergestellt, worin die Variablen die folgende Bedeutung haben:

R Wasserstoff, Chlor oder eine Methylgruppe,
A flexibler, abstandhaltender Molekülteil,
C

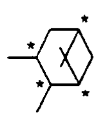 , 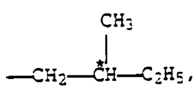 , 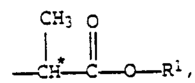

wobei
$R^1$ eine geradkettige oder verzweigte, chirale oder achirale Alkylgruppe mit 1 bis 4 C-Atomen ist.
B

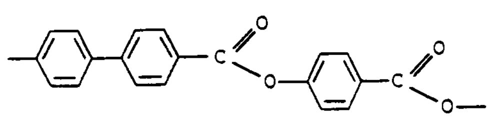

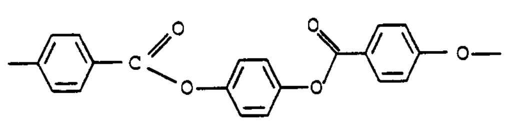

wobei wenn C

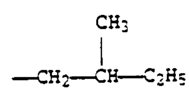

ist, kann B nicht

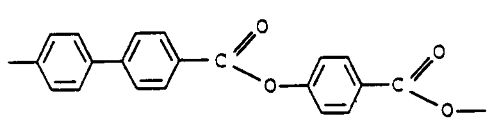

sein.

Beispiele geeigneter mesogener Molekülteile B sind Gruppen der allgemeinen Formel IX.

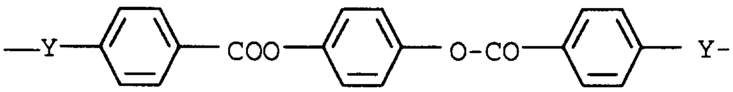

(IX)

In der allgemeinen Formel IX steht die variable Y für eine Ether-, Methylenether(-$CH_2$-O- oder -O-$CH_2$-)-, Ester(-COO- oder -OOC-)- oder Thioestergruppe (-COS- oder -SOC-) oder eine Kohlenstoff-Kohlenstoff-Einfachbindung.

Beispiele gut geeigneter Molekülteile B der allgemeinen Formel IX sind die Gruppen IX-1 bis IX-5:

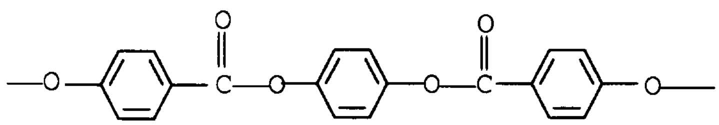

(IX-1),

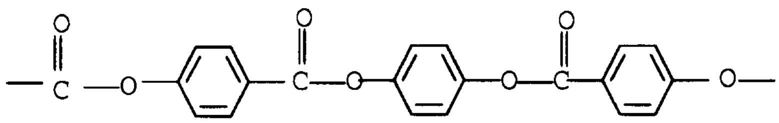

(IX-2),

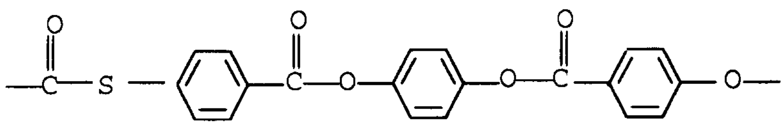

(IX-3),

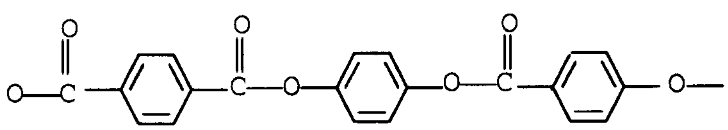

(IX-4),

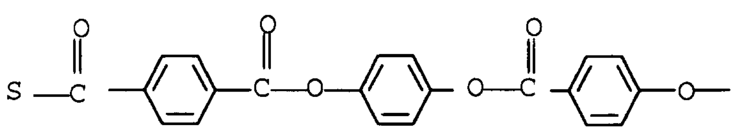

(IX-5).

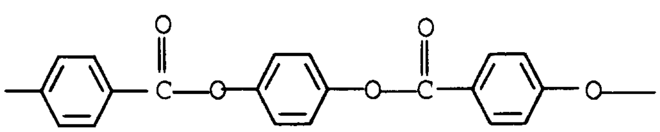

(IX-6).

Hiervon ist die Gruppe IX-1 besonders gut geeignet.

Weitere gut geeignete Molekülteile B sind Gruppen der Struktur IXb

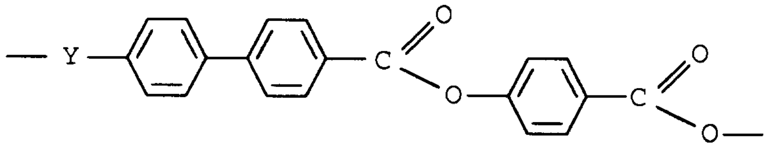

(IXb)

wobei Y die vorstehende Bedeutung hat.

Beispiele gut geeigneter Molekületeile B der allgemeinen Formel IXb sind Gruppen der Formel IXb-1 bis IXb-6:

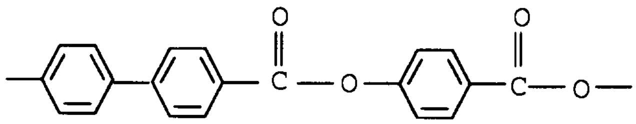

(IXb-1),

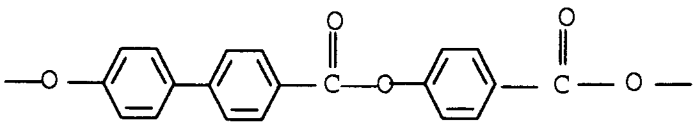

(IXb-2),

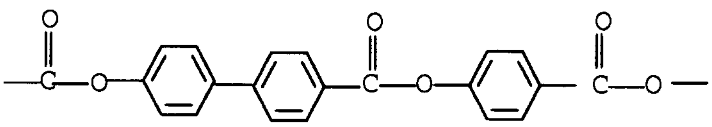

(IXb-3),

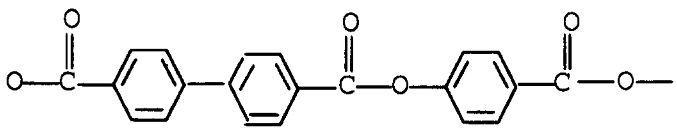

(IXb-4),

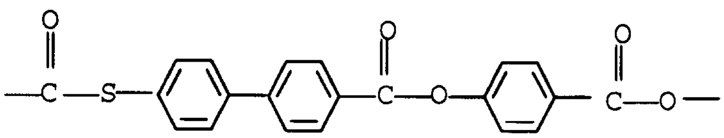

(IXb-5).

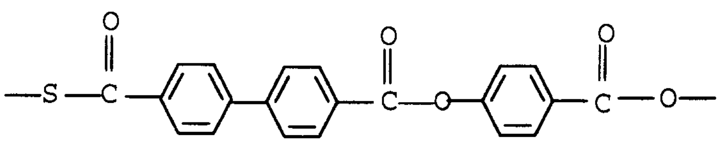

(IXb-6).

Hiervon ist die Gruppe IXb-1 und IXb-2 besonders gut geeignet.

Bei dem flexiblen abstandshaltenden langkettigen Molekulteil A handelt es sich im allgemeinen um eine langkettige Alkylengruppe, deren Kohlenstoffkette durch Ether-, Thioether- und/oder N-Alkylimino-Gruppen unterbrochen und/oder welche durch kurzkettige Alkylgruppen substituiert sein kann.

Gut geeignete Molekülteile A sind langkettige Alkylengruppen der allgemeinen Formel XI

$-(-CH_2-)_k-$ (XI)

worin der Index k eine ganze Zahl von 1 bis 30, vorzugsweise 5 bis 20, bevorzugt 8 bis 15 und insbesondere 8 bis 12 bedeutet.

Beispiele geeigneter optisch aktiver chiraler Molekülteile C weisen Gruppen der allgemeinen Formel XI-1 bis XI-3 auf

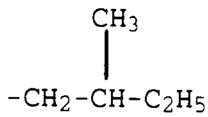

XI-1

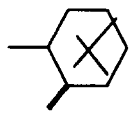

XI-2

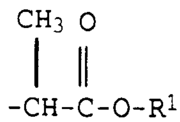

XI-3

wobei $R^1$ eine geradkettige oder verzweigte, chirale oder achriale Alkylgruppe mit 1 bis 4 C Atomen ist.

Beispiele gut geeigneter Molekulteile C der allgemeinen Formel XI-3 sind die Gruppen XI-3-1 bis XI-3-5

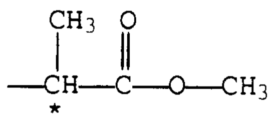

(XI-3-1)

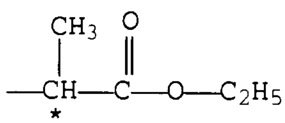

(XI-3-2)

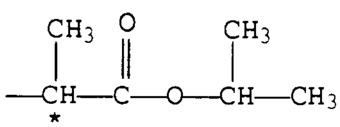

(XI-3-3)

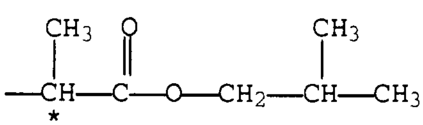

(XI-3-4) und

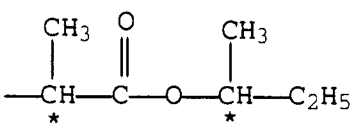

(XI-3-5)

von denen die Gruppen XI-2 bis XI-5 besonders gut geeignet sind.

Beispiele für weitere gut geeignete neue Monomere I, welche als mesogenen Molekülteil B eine Gruppe der allgemeinen Formeln enthalten und welche erfindungsgemäß mit besonderem Vorteil für die Herstellung der neuen Polymerisate P mit chiralen mesogenen Seitengruppen verwendet werden, sind die neuen Monomere I-1 bis I-19:

Molekülteil A Molekülteil B

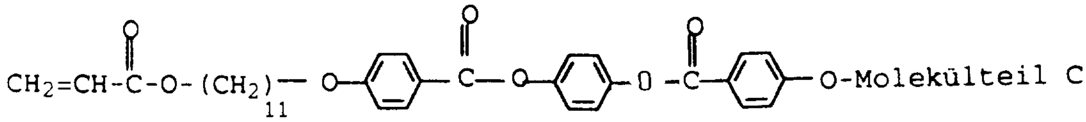

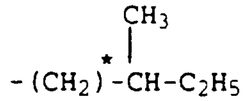 (I-1)

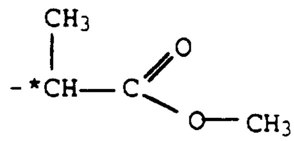 (I-2)

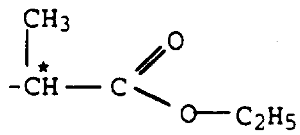 (I-3)

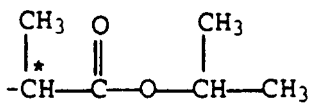 (I-4)

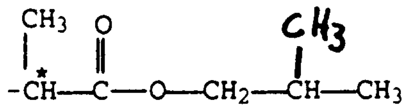 (I-5)

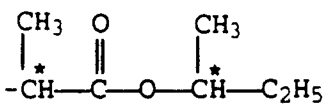 (I-6)

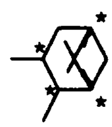 (I-7)

Weitere gut geeignete Monomere der Formel I weisen eine der folgenden Strukturen auf

Molekülteil A Molekülteil B

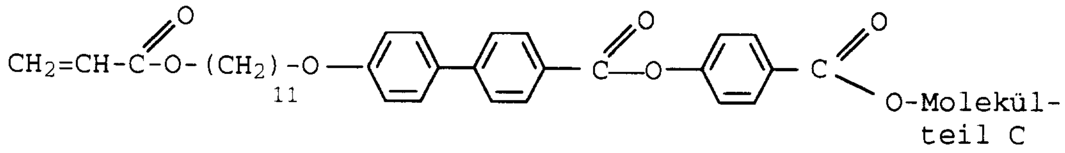

| | | | |
|---|---|---|---|
| " | wie | (I-2) | : I-8 |
| " | " | (I-3) | : I-9 |
| " | " | (I-4) | : I-10 |
| " | " | (I-5) | : I-11 |
| " | " | (I-6) | : I-12 |
| " | " | (I-7) | : I-13 |

Von all den neuen Monomeren I sind die neuen Monomeren
I-1 bis I-13
ganz besonders gut geeignet.

Methodisch gesehen weist die Herstellung der vorstehend im Detail beschriebenen Monomere I keine Besonderheiten auf, sondern sie erfolgt nach den für das in Rede stehende technische Gebiet üblichen und bekannten organischen Synthesemethoden aus geeigneten Ausgangsverbindungen, welche für sich selbst gesehen üblich und bekannt sowie gegebenenfalls im Handel erhältlich sind. Was die Synthesemethoden betrifft, sei beispielhaft auf die Patentschriften EP-A-0 258 898, EP-A-0 228 703, EP-A-0 184 482, DE-A-36 03 267 (EP-A-0 231 858), JP-A-45/62010, US-A-4 638 073 oder DE-A-36 03 268 (EP-A-0 231 857) sowie auf die Publikationen von

- G. Decobert et al. in Polymer Bulletin, Band 14, Seiten 179 bis 186, 1985;
- J.W. Goodby et al. in Molecular Crystals and Liquid Crystals, Band 110, Seiten 175 bis 203, 1984;
- D. Coates et al. in Molecular Crystals and Liquid Crystals Letters, Band 3, Heft 6, Seiten 184 bis 195, 1986;
- S.J. Fu et al. in Journal of the American Chemical Society, Band 76, Seiten 6054 und folgende, 1954;
- T. Inukai et al. in Molecular Crystals and Liquid Crystals, Band 141, Seiten 251 bis 266, 1986;
- B. Otterholm et al. in Molecular Crystals and Liquid Crystals, Band 146, Seiten 189 bis 216, 1987;
- K. Yoshino et al. in Japanese Journal of Applied Physics, Band 26, Nummer 2, Seiten L77 bis L78, Februar 1987;
- D.M. Walba et al. in Journal of the American Chemical Society, Band 108, Seiten 5210 bis 5221, 1986;
- D.Y. Byron et al. in Molecular Crystals and Liquid Crystals, Band 51, Seiten 265 bis 272, 1979;
- W.V.E. Doering in Journal of the American Chemical Society, Band 74, Seiten 393 und folgende, 1953;
- H. Finkelmann et al. in Makromolekulare Chemie, Band 179, Seiten 273 bis 276, 1978; und
- V.P. Shibaev et al. in European Polymer Journal, Band 18, Seiten 651 bis 659, 1982;

verwiesen. Die dort beschriebenen üblichen und bekannten Synthesemethoden können uneingeschränkt für die Herstellung der neuen Monomere I verwendet werden. Besonders vorteilhafte Kombinationen von Syntheseschritten werden in der nachfolgenden Übersicht schematisch dargestellt.

Schema:

Übersicht über Beispiele vorteilhafter Syntheseschritte

Syntheseschritt 1

Der Syntheseschritt 1 dient der Herstellung von Synthesebausteinen der allgemeinen Formel XII

HO-(-Aryl-)-Molekülteil C (XII)

worin der Molekülteil C eine Gruppe der Formel XI-1 bis XI-3 sein kann und er kann wie folgt durchgeführt werden:

Syntheseschritt 1.1

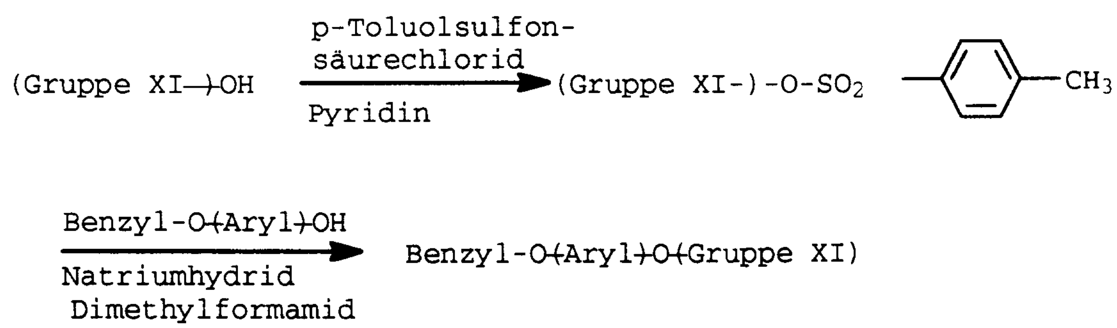


Syntheseschritt 1.2

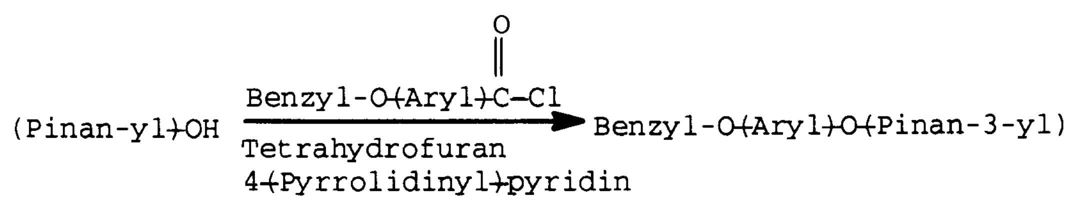


Syntheseschritt 1.3

Der Syntheseschritt 1.3 dient der Herstellung des Synthesebausteins der allgemeinen Formel XIII

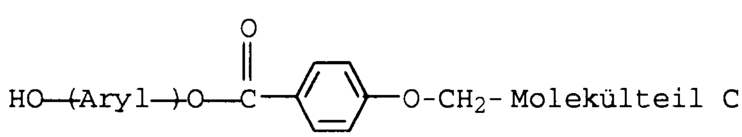

(XIII)

worin die Methylengruppe Bestandteil des Molekülteils C ist, und er kann wie folgt ausgeführt werden:

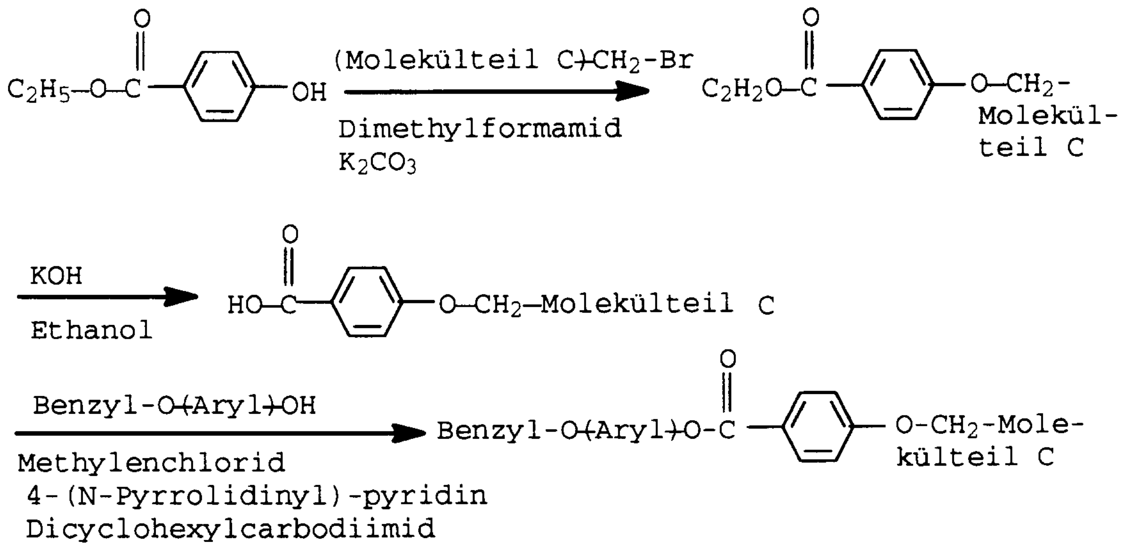


Syntheseschritt 1.4

Die durch die Syntheseschritte 1.1 bis 1.3 erhaltenen Benzylether können im Syntheseschritt 1.4 mit Hilfe von Wasserstoff in der Gegenwart von Raneynickel gespaltet werden, wodurch die Synthesebausteine XII und XIII resultieren.

Syntheseschritt 2

Der Syntheseschritt 2 dient der Herstellung von Synthesebausteinen der allgemeinen Formel XIV

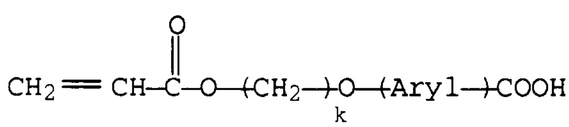

(XIV)

worin der Index k die vorstehend angegebene Bedeutung hat, und er kann wie folgt ausgeführt werden:

$HO-(-CH_2-)_k-Br$

$HO-(-Aryl-)-COOC_2H_5$ $HO-(-CH_2-)_k-O-(-Aryl-)-COOC_2H_5$

$K_2CO_3$
Dimethylformamid

KOH, Ethanol

$HO-(-CH_2-)_k-O-(-Aryl-)-COOH$

Acrylsäure

Synthesebaustein XIV

1,1,1-Trichlorethan
Hydrochinon
p-Toluolsulfonsäure

Syntheseschritt 3

Im Syntheseschritt 3 werden die Synthesebausteine XIII oder XIV (vgl. die Syntheseschritt 1.1 bis 1.5) mit den Synthesebausteinen XV z.B. in Methylenchlorid in der Gegenwart von Dicyclohexylcarbodiimid und 4-(N-Pyrrolidinyl)-pyridin zu den neuen Monomeren I umgesetzt.

Die in dieser Weise hergestellten neuen Monomere I können bei allen für niedermolekulare mesogene Verbindungen vorgesehenen Verwendungszwecken an die Stelle der bislang üblichen und bekannten niedermolekularen mesogenen Verbindungen treten. Vorteilhafterweise werden sie indes für die Herstellung der neuen Polymerisate P mit chiralen mesogenen Seitengruppen verwendet, die ferroelektrisches smektisch flüssigkristallines ($S_C^*$) Verhalten zeigen.

Bei den neuen Polymerisaten P mit chiralen mesogenen Seitengruppen handelt es sich entweder um neue Homo- oder Copolymerisate P der neuen Monomere I untereinander oder um neue Copolymerisate P der neuen Monomeren I mit an sich bekannten weiteren Comonomeren. Durch diese an sich bekannten weiteren Comonomeren können in die neuen Copolymerisate P an sich bekannte mesogene Seitengruppen, welche gegebenenfalls auch ferroelektrisches smektisch flüssigkristallines ($S_C^*$) Verhalten zeigen, und/oder Seitengruppen mit dichroitischen Chromophoren eingeführt werden.

Geeignete neue Homo- und Copolymerisate P mit chiralen mesogenen Seitengruppen weisen im allgemeinen einen Polymerisationsgrad von 10 bis 50, insbesondere 10 bis 40 und vorzugsweise 10 bis 30 auf.

Hinsichtlich der üblichen und bekannten Comonomeren und der üblichen und bekannten mesogenen Seitengruppen sei auf die Patentschriften DE-A-36 03 268 (EP-A-0 231 857), DE-A-36 03 267 (EP-A-0 231 858), EP-A-0 184 482, EP-A-0 228 703, DE-A-37 04 146, DE-A-35 00 838, US-A-4 293 435, DE-A-34 29 438 und EP-A-0 171 045 verwiesen.

Von den Comonomeren, welche der Einführung von Seitengruppen mit dichroitischen Chromophoren in die neuen Copolymerisate P dienen, sind diejenigen, der allgemeinen Formel XIV, bevorzugt.

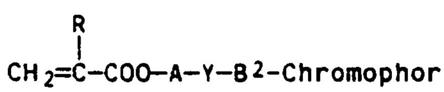
(XV),

Hierin haben die Variablen R, A, Y und $B^2$ die vorstehend angebene Bedeutung, und "Chromophor" bezeichnet einen Farbstoffrest. Vorzugsweise ist hierbei die Variable A eine Gruppe der allgemeinen Formel X

$-(CH_2)_k-$ (X)

worin der Index k die vorstehend angegebene Bedeutung hat. Hierbei ist es von Vorteil, wenn der Index k für 9 bis 12, insbesondere 11, steht. Außerdem ist es von Vorteil, wenn die Variable Y eine Ethergruppe bezeichnet. Von Vorteil ist ferner, wenn die Variable $B^2$ eine p-Phenylengruppe ist. Besondere Vorteile ergeben sich, wenn der Chromophor ein Anthrachinonfarbstoffrest ist, wobei der Anthrachinonfarbstoffrest

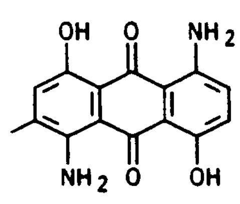

ganz besonders vorteilhaft ist. Comonomere XV sind aus der DE-A-36 31 841 bekannt.

Desweiteren sind von den Comonomeren, welche der Einführung von Seitengruppen mit dichroitischen Chromophoren in die neuen Copolymerisate P dienen, diejenigen der allgemeinen Formel XVI bevorzugt.

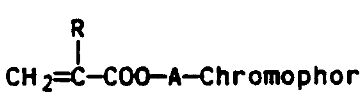
(XVI).

Hierin haben die Variablen R und A die vorstehend angegebene Bedeutung. Besondere Vorteile ergeben sich, wenn der Chromophor ein Anthrachinonfarbstoffrest ist, wobei der Anthrachinonfarbstoffrest

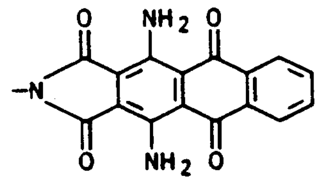

ganz besonders vorteilhaft ist. Comonomere XVI mit diesem Anthrachinonfarbstoffrest lassen sich in üblicher und bekannter Weise z.B. durch Umsetzung der freien Imidogruppe des Anthrachinonfarbstoffs mit einem $\omega$-Hydroxyalkylbromid und nachträgliche Veresterung der resultierenden N-($\omega$-Hydroxyalkyl)-imidgruppe mit Acrylsäure, Methacrylsäure oder $\alpha$-Chloracrylsäure herstellen.

Beispiele gut geeigneter neuer Homopolymerisate P mit chiralen mesogenen Seitengruppen sind die neuen Homopolymerisate P1 bis P13 welche von jeweils einem der neuen Monomere I-1 bis I-13 gebildet werden.

Beispiele besonders gut geeigneter neuer Homopolymerisate P mit chiralen mesogenen Seitengruppen sind die neuen Homopolymerisate P der vorstehend im Detail beschriebenen besonders gut geeigneten neuen Monomere I.

Beispiele ganz besonders gut geeigneter neuer Homopolymerisate P mit chiralen mesogenen Seitengruppen sind die neuen Homopolymerisate der ganz besonders gut geeigneten neuen Monomere I-1 bis I-13, welche demnach folgerichtig als P-1 bis P-13 bezeichnet werden.

Beispiele gut geeigneter neuer Copolymerisate P mit chiralen mesogenen Seitengruppen sind die neuen Copolymerisate P, welche von jeweils mindestens zwei der neuen Monomere I-1 bis I-13 gebildet werden.

Beispiele besonders gut geeigneter neuer Copolymerisate P mit chiralen mesogenen Seitengruppen sind die neuen Copolymerisate P, welche von jeweils mindestens zwei der vorstehend im Detail beschriebenen besonders gut geeigneten neuen Monomeren I gebildet werden.

Beispiele ganz besonders gut geeigneter neuer Copolymerisate P mit chiralen mesogenen Seitengruppen sind die neuen Copolymerisate P, welche von jeweils mindestens zwei der ganz besonders gut geeigneten neuen Monomere I-1 bis I-13 gebildet werden.

Weitere Beispiele gut geeigneter neuer Copolymerisate P mit chiralen mesogenen Seitengruppen sind die neuen Copolymerisate P, welche von mindestens einem der neuen Monomere I-1 bis I-13 und von mindestens einem der üblichen und bekannten Comonomeren gebildet werden.

Weitere Beispiele besonders gut geeigneter neuer Copolymerisate P mit chiralen mesogenen Seitengruppen sind die neuen Copolymerisate P, welche von mindestens einem der vorstehend im Detail beschriebenen besonders gut geeigneten neuen Monomeren I und von mindestens einem der üblichen und bekannten Monomeren gebildet werden.

Besondere Vorteile ergeben sich, wenn die weiteren Beispiele gut, besonders gut und ganz besonders geeigneter neuer Copolymerisate P zusätzlich zu oder anstelle von den üblichen und bekannten Comonomeren Comonomere XV und/oder Comonomere XVI einpolymerisiert enthalten. Neue Copolymerisate P dieser Art sind erfindungsgemäß bevorzugt.

Methodisch weist die Herstellung der neuen Homo- und Copolymerisate P keine Besonderheiten auf, sondern sie erfolgt nach den Methoden, wie sie für die thermisch und/oder radikalisch initiierte (Co)-Polymerisation in Masse oder in Lösung üblich und bekannt sind.

Das erfindungsgemäße Aufzeichnungselement enthält neben der erfindungswesentlichen neuen Aufzeichnungsschicht (a) weitere Schichten, welche für seine Funktion von Nutzen sind.

Vorteilhafte erfindungsgemäße Aufzeichnungselemente umfassen dabei

(b) einen ersten dimensionsstabilen Träger, welcher auch optisch transparent sein kann,
(c) eine das Laserlicht reflektierende erste Elektrodenschicht,
(d) eine erste Orientierungsschicht,
(a) die erfindungswesentliche neue Aufzeichnungsschicht,
(e) eine zweite Orientierungsschicht,
(f) eine optische transparente zweite Elektrodenschicht und
(g) einen optisch transparenten zweiten dimensionsstabilen Träger.

Hinsichtlich dieses Aufbaus ist das erfindungsgemäße Aufzeichnungselement vergleichbar mit den bekannten wiederholt löschbaren und beschreibbaren laseroptischen Aufzeichnungselementen, welche in der EP-A-0 205 187, der GB-A-21 81 263, der EP-A-0 271 900 oder der US-A-4 752 820 beschrieben sind. Aus diesen Patentschriften gehen außerdem Beispiele geeigneter erster dimensionsstabiler Träger (b), das Laserlicht reflektierender erster Elektrodenschichten (c), erster Orientierungsschichten (d), zweiter Orientierungsschichten (e), optisch transparenter zweiter Elektrodenschichten (f) sowie optisch transparenter zweiter dimensionsstabiler Träger (g) hervor.

Methodisch gesehen weist die Herstellung des erfindungsgemäßen Aufzeichnungselements keine Besonderheiten auf, sondern erfolgt nach den vom Stand der Technik her bekannten Methoden, wie sie beispielsweise in der EP-A-0 205 178, der GB-A-2 181 236, der US-A-4 752 820, der EP-A-0 171 045, der DE-A-37 04 146, der DE-A-36 03 268 (EP-A-0 231 857), der DE-A-36 03 267 (EP-A-0 231 858), der EP-A-0 271 900 oder der DE-A-34 29 438 beschrieben werden.

Bei der Herstellung des erfindungsgemäßen Aufzeichnungselements ist bekanntermaßen zu beachten, daß die Orientierungsschichten (d) und (e) so strukturiert werden, daß die chiralen mesogenen Seitengruppen der neuen Polymerisate P in der neuen Aufzeichnungsschicht (a) homeotrop orientiert sind, wobei ihre Moleküllängsachsen gegenüber der Normalen Z in Richtung des Direktors $\vec{n}$ im Tiltwinkel Θ geneigt sind, wie es einer ferroelektrischen smektisch flüssigkristallinen $S_C^*$ -Phase entspricht.

Hat das erfindungsgemäße Aufzeichnungselement die Form einer runden Scheibe (Disk), so ist es von besonderem Vorteil, wenn die Normale Z eine konzentrische Kreisbahn um den Mittelpunkt der Scheibe beschreibt, was auch als tangentiale Orientierung bezeichnet wird. Die Methoden zur Strukturierung der Orientierungsschichten (d) und (e) sind bekannt und gehen beispielsweise aus den vorstehend genannten Patentschriften oder aus den Publikationen von

- M.J. Bradshaw et al. in Liquid Crystals, Band 2, Seiten 107 bis 110, 1987;
- A. Mosley et al. in Displays, Seiten 17 bis 21, Januar 1987;
- D. Williams et al. in Journal of Physics, Part D: Applied Physics, Band 19, Seiten L37 bis L41, 1986;
- M.E. Becker et al. in Molecular Crystals and Liquid Crystals, Band 132, Seiten 167 bis 180, 1986;
- J.S. Patel et al. in Ferroelectrics, Band 59, Seiten 137 bis 144, 1984;
- J.S. Patel et al. in Journal of Applied Physics, Band 59, Seiten 2355 bis 2360, 1986;

und von

- J.M. Geary et al. in Journal of Applied Physics, Band 62, Seiten 4100 bis 4108, 1987;

hervor.

Das erfindungsgemäße Aufzeichnungselement eignet sich hervorragend für das wiederholte Schreiben, Lesen und Löschen von Daten.

Bekanntermaßen werden hierbei die Daten in die homeotrop orientierte, den Tiltwinkel Θ von $+\alpha$ oder $-\alpha$ aufweisende, ferroelektrische smektisch flüssigkristalline ($S_C^*$ ) Aufzeichnungsschicht (a) eines laseroptischen Aufzeichnungselements eingeschrieben. Dabei erfolgt das Einschreiben der digitalen oder der analogen Daten mit Hilfe eines Schreiblaserstrahls ausreichender Lichtleistung ggf. unter Anlegen eines äußeren elektrischen Feldes. In den Auftreffstellen des Schreiblaserstrahls bilden sich optisch nachweisbare, bei Raumtemperatur stabile enantiotrope Bereiche, die bei Raumtemperatur glasartig eingefrorene ferroelektrische smektisch flüssigkristallinen $S_C^*$ -Phasen eines Tiltwinkels Θ von $-\alpha$ oder von $+\alpha$, smektisch flüssigkristalline $S_A^*$ -Phasen, ungeordnete Mikrodomänen (Streuzentren) oder isotrope I-Phasen sind.

Hiernach können die eingeschriebenen Daten oder Bereiche bekanntermaßen mit Hilfe eines Leselaserstrahl über den Doppelbrechungskontrast, den Dichroismuskontrast, die Lichtstreuung an Streuzentren und/oder über die Interferenz reflektierter Laserlichtwellen unterschiedlicher Phasengeschwindigkeit detektiert werden. Dabei erweist es sich von Vorteil, wenn man das von dem betreffenden Aufzeichnungselement reflektierte Licht analysiert und in Signale umwandelt.

Hiernach können bei Bedarf die eingeschriebenen Daten oder Bereiche insgesamt oder selektiv durch vollflächiges oder punktuelles Erwärmen der beschriebenen Aufzeichnungsschicht (a) in einem äußeren elektrischen Feld wieder gelöscht werden.

Danach kann das Schreiben und das Lesen der Daten wiederholt werden.

Dieses Verfahren erweist sich dann als besonders schnell und zuverlässig ausführbar, wenn es mit Hilfe des erfindungsgemäßen Aufzeichnungselements mit der neuen Aufzeichnungsschicht (a) durchgeführt wird. Außerdem erweist sich hierbei das erfindungsgemäße Aufzeichnungselement als besonders lagerstabil, so daß auch nach längerer Lagerung kein Verlust der eingeschriebenen Daten eintritt. Beim Schreiben erweist es sich als besonders empfindlich, so daß zum einen Schreiblaser mit geringer Lichtleistung verwendet werden können, und zum anderen kann die Einschreibgeschwindigkeit im Vergleich zum Stand der Technik deutlich erhöht werden. Beim Lesen liefert das erfindungsgemäße Aufzeichnungselement bei einem ausgesprochen niedrigen Grundrauschen besonders starke scharfe Signale, wodurch ein hohes Signal-Rausch-Verhältnis resultiert.

Hervorragende Ergebnisse werden erhalten, wenn die Daten in die neue Aufzeichnungsschicht (a) des erfindungsgemäßen Aufzeichnungselements in der Form von optisch nachweisbaren, bei Raumtemperatur stabilen Bereichen eingeschrieben werden, welche ferroelektrische smektisch flüssigkristalline $S_C^*$ -Phasen des dem ursprünglichen Tiltwinkel Θ entgegengesetzten Tiltwinkels Θ von -α oder von +α sind.

Das vorstehend beschriebene Verfahren für das wiederholte Schreiben, Lesen und Löschen von Daten kann mit Hilfe von bekannten Vorrichtungen oder Plattenlaufwerken durchgeführt werden. Vorrichtungen oder Plattenlaufwerke, welche für das in Rede stehende Verfahren geeignet sind, gehen beispielsweise aus der EP-A-0 205 187 hervor.

Hierbei ergeben sich weitere Vorteile, wenn man die in der DE-A-37 04 146 beschriebenen Plattenlaufwerke mit einem drehbaren laseroptischen Schreib- und Lesekopf verwendet.

Beispiele

Beispiele 1 bis 9 und Vergleichsversuche V1 bis V5

Die Herstellung und die Charakterisierung von neuen Monomeren I und von bekannten Monomeren

Allgemeine Herstellvorschrift:

Die neuen Monomere I (Beispiele 1 bis 9) und die bekannten Monomere (Vergleichsversuche V1 bis V5) wurden aus üblichen und bekannten, zum Teil im Handel erhältlichen Ausgangsstoffen nach den in der Literatur beschriebenen Synthesemethoden hergestellt (vgl. das Schema: Übersicht über Beispiele vorteilhafter Syntheseschritte).

Hierbei wurden zunächst die jeweils geeigneten Synthesebausteine XII, XIII und XIV hergestellt, wonach man diese zu den neuen Monomeren I oder den bekannten Monomeren umsetzte.

Hierzu wurden zu 250 ml wasserfreiem Methylenchlorid oder Chloroform nacheinander 42 mmol des Synthesebausteins XIII (Carbonsäure), 42 mmol des Synthesebausteins XII oder XIII (Phenol), 42 mmol Dicyclohexylcarbodiimid und 2,5 mmol (N-Pyrrolidinyl)-pyridin hinzugegeben. Die resultierende Mischung wurde bei Raumtemperatur bis zur vollständigen Umsetzung gerührt, wobei der Fortgang der Reaktion durch die Dünnschichtchromatographie überwacht wurde.

Nach der Beendigung der Reaktion wurde die resultierende Reaktionsmischung mit Eis gekühlt. Der hiernach gebildete Niederschlag von Dicyclohexylharnstoff wurde abfiltriert, wonach man das Lösungsmittel verdampfte.

Der resultierende meist ölige Rückstand wurde an Kieselgel chromatographisch gereinigt, wobei Toluol, Essigester, Hexan, Ethanol oder deren Gemische als Lösungs- und Laufmittel verwendet wurden.

Der chromatographisch gereinigte Rückstand wurde anschließend mehrfach in einem geeigneten Lösungsmittel umkristallisiert.

Alle in dieser Weise hergestellten neuen Monomere I (Beispiele 1 bis 3) und bekannten Monomere (Vergleichsversuche V1 bis V5) wurden elementaranalytisch und mit Hilfe der 1H-Kernresonanzspektroskopie (1H-NMR, 200 und 300 MHz, Tetramethylsilan als interner Standard, Lösungsmittel $CDCl_3$) charakterisiert. Die elementaranalytisch ermittelte Zusammensetzung der hergestellten Monomeren entsprach den theoretisch berechneten werten.

Die Tabelle 1 gibt einen überblick über die hergestellten Verbindungen und ihre $^1$H-NMR-Spektren.

In der Tabelle 1 haben die Abkürzungen die folgende Bedeutung:

| | |
|---|---|
| H | Wasserstoffatome ; |
| al | aliphatisch ; |
| ar | aromatisch ; |
| s | Singulett ; |
| d | Doublett ; |
| t | Triplett ; |
| q | Quartett ; |
| m | Multiplett. |

Tabelle 1: Neue Monomere I (Beispiele 1 bis 9) und bekannte Monomere (Vergleichsversuche V1 bis V5)

| Beispiel | Bezeichnung | Struktur | Monomer $^1H$-NMR (δ in ppm) |
|---|---|---|---|
| 1 | I-1 | 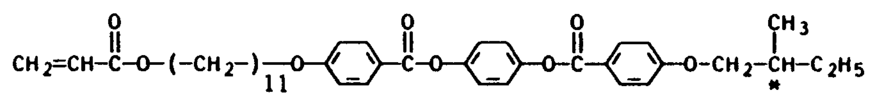 umkristallisiert aus Ethanol | 0,91-2,00 (m, al-H)<br>3,80-4,20 (m, 6H, $OCH_2$)<br>5,83 (d, 1H, $CH_2$=CH)<br>6,21-6,33 (m, 1H, $CH_2$=CH)<br>6,41 (d, 1H, $CH_2$=CH)<br>7,00 (d, 4 ar-H)<br>7,29 (s, 4 ar-H)<br>8,17 (d, 4 ar-H) |

Tabelle 1: Forts.

| Beispiel | Bezeichnung | Struktur (Monomer) | $^1H$-NMR (δ in ppm) (Monomer) |
|---|---|---|---|
| 2 | I-13 | 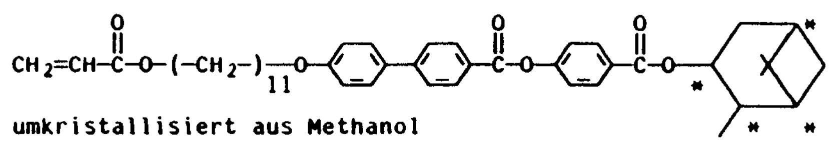<br>umkristallisiert aus Methanol | 0,93-2,77 (m, al-H)<br>4,05 (t, 2H, $OCH_2$)<br>4,15 (t, 2H, $OCH_2$)<br>5,24-5,37 (m, 1H, OCH)<br>5,83 (d, 1H, $CH_2$=CH)<br>6,05-6,19 (m, 1H, $CH_2$=CH)<br>6,40 (d, 1H, $CH_2$=CH)<br>7,00-8,29 (m, 12 ar-H) |

Tabelle 1: Forts.

| Beispiel | Bezeichnung | Monomer: Struktur | Monomer: $^1H$-NMR (δ in ppm) |
|---|---|---|---|
| 3 | I-9 | 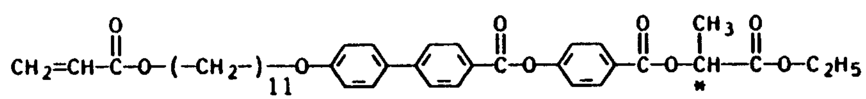<br>umkristallisiert aus Isopropanol | 1,20-1,88 (m, al-H)<br>3,91-4,32 (m, 6H, $OCH_2$)<br>5,32 (q, 1H, OCH)<br>5,81 (d, 1H, $CH_2$=CH)<br>6,05-6,20 (m, 1H, $CH_2$=CH)<br>6,40 (d, 1H, $CH_2$=CH)<br>6,95-8,33 (m, 12 ar-H) |

Tabelle 1: Forts.

| Beispiel | Monomer | | |
|---|---|---|---|
| | Bezeichnung | Struktur | $^1$H-NMR (δ in ppm) |
| Vergl. Vers. V1 | - | 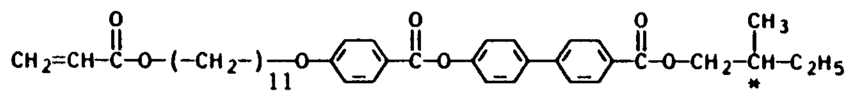<br>umkristallisiert aus Methanol | 1,02-2,07 (m, al-H)<br>4,24-4,46 (m, 6H, $OCH_2$)<br>6,05 (d, 1H, $CH_2$=CH)<br>6,20-6,32 (m, 1H, $CH_2$=CH)<br>6,57 (d, 1H, $CH_2$=CH)<br>7,18-8,17 (m, 12 ar-H) |

Tabelle 1: Forts.

| Beispiel | Bezeichnung | Struktur (Monomer) | $^1H$-NMR ($\delta$ in ppm) |
|---|---|---|---|
| V2 | - | 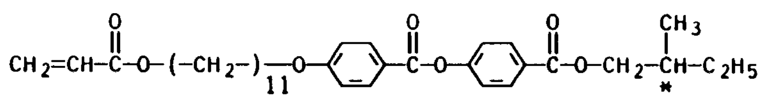<br>umkristallisiert aus Methanol | 0,95-1,93 (m, al-H)<br>4,00-4,27 (m, 6H, $OCH_2$)<br>5,83 (d, 1H, $CH_2$=CH)<br>6,07-6,20 (m, 1H, $CH_2$=CH)<br>6,41 (d, 1H, $CH_2$=CH)<br>6,98-8,20 (m, 8 ar-H) |
| V3 | - | 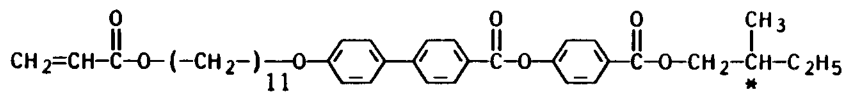<br>umkristallisiert aus Isopropanol | 0,80-2,00 (m, al-H)<br>3,80-4,30 (m, 6H, $OCH_2$)<br>5,81 (d, 1H, $CH_2$=CH)<br>6,40 (d, 1H, $CH_2$=CH)<br>6,00-6,20 (m, 1H, $CH_2$=CH)<br>6,89-8,29 (m, 12 ar-H) |

Tabelle 1: Forts.

| Beispiel | Monomer Bezeichnung | Struktur | $^1H$-NMR (δ in ppm) |
|---|---|---|---|
| V4 | - | 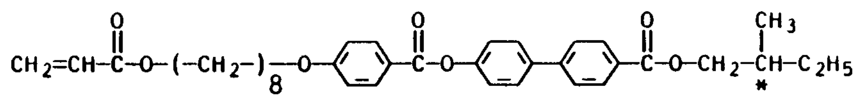 umkristallisiert aus Methanol | 0,80-2,00 (m, al-H)<br>4,00-4,31 (m, 6H, $OCH_2$)<br>5,83 (d, 1H, $CH_2$=CH)<br>6,07-6,20 (m, 1H, $CH_2$=CH)<br>6,43 (d, 1H, $CH_2$=CH)<br>6,95-8,27 (m, 12 ar-H) |
| V5 | - | 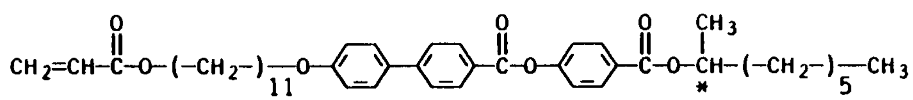 umkristallisiert aus Isopropanol | 0,80-1,88 (m, al-H)<br>4,10 (t, 2H, $OCH_2$)<br>4,15 (t, 2H, $OCH_2$)<br>5,16 (q, 1H, OCH)<br>5,83 (d, 1H, $CH_2$=CH)<br>6,04-6,20 (m, 1H, $CH_2$=CH)<br>6,41 (d, 1H, $CH_2$=CH)<br>7,0[illegible] 8,31 (m, 12 ar-H) |

Beispielen 4 bis 14 und Vergleichsversuche V6 bis V11

Die Herstellung und die Charakterisierung von neuen Homo- und Copolymerisaten P und von bekannten Homo- und Copolymerisaten

Allgemeine Versuchvorschrift:

Zur (Co)Polymerisation wurden jeweils ein oder mehrere neue Monomere I ggf. zusammen mit einem oder mehreren bekannten Comonomeren (Beispiele 10 bis 23) sowie jeweils ein bekanntes Monomer (Vergleichsversuche V6 bis V9) in Schlenkgefäßen zusammen mit Azo-bis-isobutyronitril in absolutem Tetrahydrofuran, Toluol, Dioxan oder Dimethylformamid unter Argoneinleitung aufgelöst. Nach weiterer 10 minütiger Einleitung von Argon wurden die Monomerlösungen bei 50 °C thermostatisiert. Nach Beendigung der (Co)Polymerisation wurden die (Co)Polymerisate von den Monomeren ausschlußchromatographisch an Sephadex LH 20 abgetrennt, wobei Tetrahydrofuran als Lösungs- und Laufmittel verwendet wurde. Die so gereinigten (Co)Polymerisate wurden mehrfach aus Tetrahydrofuran durch Zugabe von Methanol oder Petrolether umgefällt, isoliert und hiernach im Hochvakuum getrocknet.

Die Zusammensetzung der erhaltenen (Co)Polymerisate wurde elementaranalytisch ermittelt. Die hierbei erhaltenen Werte stimmten in allen Fällen mit den theoretisch berechneten Werten gut überein.

Die Zusammensetzung der Copolymerisate mit dichroitische Chromophore enthaltenden Seitengruppen wurde des weiteren durch die Spektroskopie mit UV-Licht und sichtbarem Licht bestimmt.

Die übrigen (Co)Polymerisate wurden mit Hilfe der $^1$H-NMR-Spektroskopie in $CDCl_3$ mit Tetramethylsilan als internem Standard charakterisiert.

Für die Identifizierung der flüssigkristallinen Phasen und für die Bestimmung der Phasenübergangstemperaturen wurden die üblichen und bekannten Röntenbeugungsmethoden, die polarisationsmikroskopischen Methoden sowie die calorimetrischen Methoden der Differentialthermoanalyse (DTA) und der Differentialscanningcalorimetrie (DSC) herangezogen.

Die Tabelle 2 gibt einen Überblick über die Strukturen der hergestellten (Co)Polymerisate und faßt die hieran ermittelten Meßergebnisse zusammen. Außerdem werden die Lösungsmittel, in welchen die (Co)-Polymerisation durchgeführt wurde, und ggf. das Verhältnis von neuem Monomer I zu bekanntem Comonomer angegeben.

In der Tabelle 2 haben die Abkürzungen die folgende Bedeutung:

| | |
|---|---|
| H | Wasserstoffatom; |
| al | aliphatisch; |
| ar | aromatisch; |
| q | Quartett; |
| m | Multiplett; |
| G | Glasstufe; |
| I | isotrope Phase; |
| N* | cholesterische Phase; |
| $S_A$ | smektisch-A-Phase; |
| $S_C$* | smektisch-C*-Phase; |
| NNI | noch nicht identifiziert; |
| THF | Tetrahydrofuran; |
| DMF | Dimethylformamid; und |
| VIS | sichtbares Licht |

Tabelle 2: Neue Homo- und Copolymerisate P (Beispiele4 10 bis 23) und bekannte Polymerisate (Vergleichsversuche V6 bis V9)

| Bsp. | (Co)Polymerisat<br>Verwendetes neues Monomer I Bezeichnung | <br>Struktur (Lösungsmittel der (Co)Polymerisation) [Phasenübergangsverhalten (°C)] | 1H-NMR (δ in ppm) oder UV/VIS-Spektroskopie |
|---|---|---|---|
| 4 | I-1, P1... | 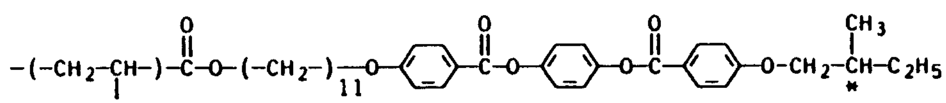<br>(THF)<br>[G 50 NNI 133 N* 170 I] | 0,80-2,40 (m, al-H)<br>3,60-4,16 (m, 6H, $OCH_2$)<br>6,90-8,25 (m, 12 ar-H) |

Forts. Tab. 2

| Bsp. | (Co)Polymerisat<br>Verwendetes neues Monomer I Bezeichnung | Struktur<br>(Lösungsmittel der (Co)Polymerisation)<br>[Phasenübergangsverhalten (°C)] | 1H-NMR (δ in ppm) oder UV/VIS-Spektroskopie |
|---|---|---|---|
| 5 | I-13, P13... | 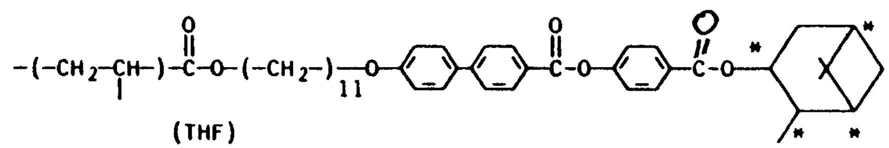<br>(THF)<br>[G 50 $S_C^*$ 128 $S_A$ 160 I] | 1,00-2,80 (m, al-H)<br>3,80-4,15 (m, 4H, $OCH_2$)<br>5,28-5,36 (m, 1H, OCH)<br>6,95-8,27 (m, 12 ar-H) |

Forts. Tab. 2

| Bsp. | Verwendetes neues Monomer I Bezeichnung | (Co)Polymerisat<br>Struktur<br>(Lösungsmittel der (Co)Polymerisation)<br>[Phasenübergangsverhalten (°C)] | 1H-NMR (δ in ppm) oder UV/VIS-Spektroskopie |
|---|---|---|---|
| 6 | I-12, P12 ... | 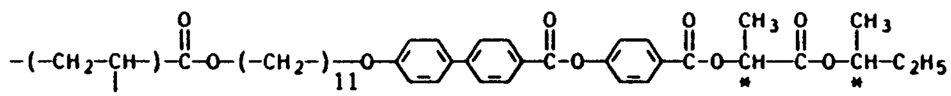<br>(THF)<br>[G 50 $S_C^*$ 105 $S_A$ 130 I] | 0,89-2,2 (m, al-H)<br>3,68-4,15 (m, 7H, OCH, $OCH_2$)<br>5,36 (q, 1H, OCH)<br>6,96-8,27 (m, 12 ar-H) |
| 7 | I-9, P9... | 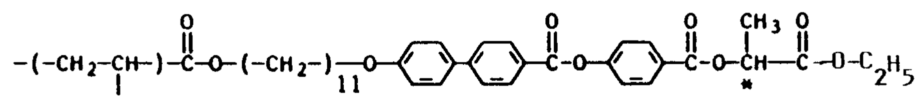<br>(DMF) | 1,00-2,10 (m, al-H)<br>3,80-4,29 (m, 6H, $OCH_2$)<br>5,32 (q, 1H, OCH),<br>6,90-8,25 (m, 12 ar-H) |

Forts. Tab. 2

| Bsp. | Verwendetes neues Monomer I Bezeichnung | (Co)Polymerisat Struktur (Lösungsmittel der (Co)Polymerisation) [Phasenübergangsverhalten (°C)] | 1H-NMR (δ in ppm) oder UV/VIS-Spektroskopie |
|---|---|---|---|
| 8 | I-13, V1 | 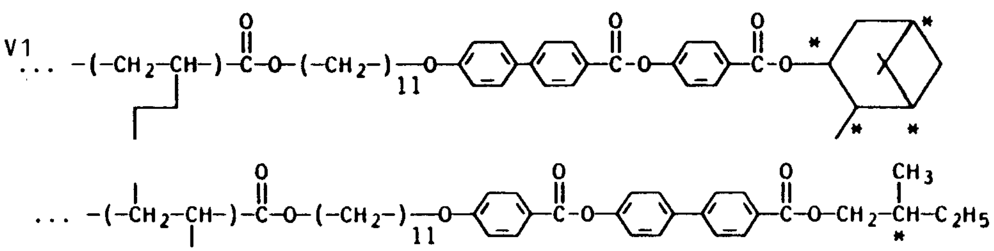 Molverhältnis 1 : 1 (THF) [G 60 NNI 135 $S_C^*$ 155 $S_A$ 184 I] | 0,80-2,80 (m, al-H)<br>3,70-4,30 (m, $OCH_2$)<br>5,25-5,35 (m, OCH)<br>6,80-8,31 (m, ar-H) |

Forts. Tab. 2

| Bsp. | Verwendetes neues Monomer I Bezeichnung | (Co)Polymerisat Struktur (Lösungsmittel der (Co)Polymerisation) [Phasenübergangsverhalten (°C)] | 1H-NMR (δ in ppm) oder UV/VIS-Spektroskopie |
|---|---|---|---|
| 9 | I-1<br>I-13<br>V1 | 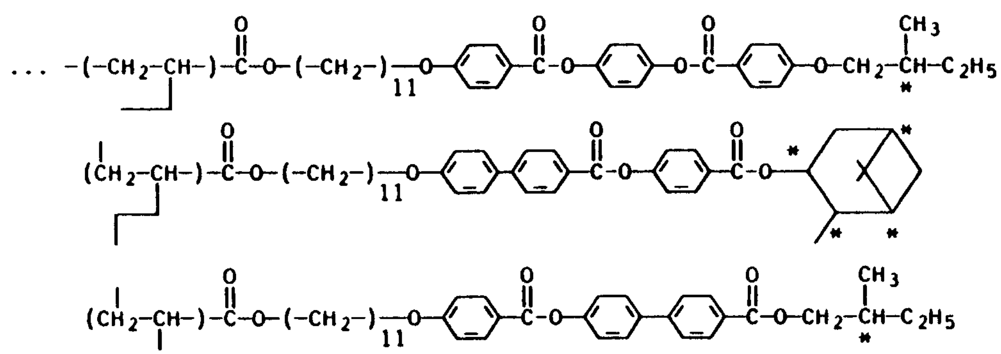<br>Monomerverhältnis 1 : 1 : 1<br>(THF)<br>[G 50 $S_C^*$ 118 NNI 147 $S_A$ 172 I] | 0,80-2,80 (m, al-H)<br>3,60-4,28 (m, $OCH_2$)<br>5,24-5,35 (m, OCH)<br>6,95-8,28 (m, ar-H) |

Forts. Tab. 2

| Bsp. | Verwendetes neues Monomer I Bezeichnung | (Co)Polymerisat<br>Struktur<br>(Lösungsmittel der (Co)Polymerisation)<br>[Phasenübergangsverhalten (°C)] | 1H-NMR (δ in ppm)<br>oder<br>UV/VIS-Spektroskopie |
|---|---|---|---|
| 10 | I-1<br>V1 | 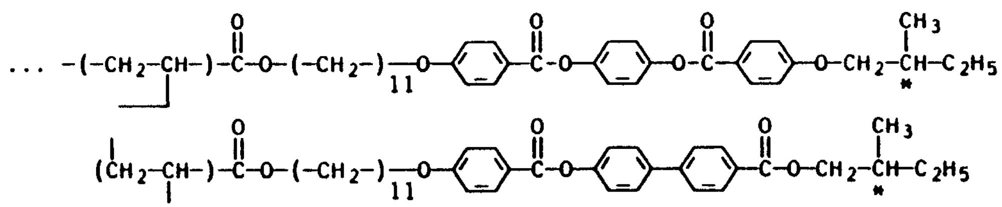<br>Molverhältnis 1 : 1<br>(THF)<br>[G 50 $S_C$* 100 $S_A$ 135 N* 159 I] | 0,80-2,40 (m, al-H)<br>3,60-4,29 (m, $OCH_2$)<br>6,95-8,24 (m, ar-H) |
| 11 | I-1<br>V5 | 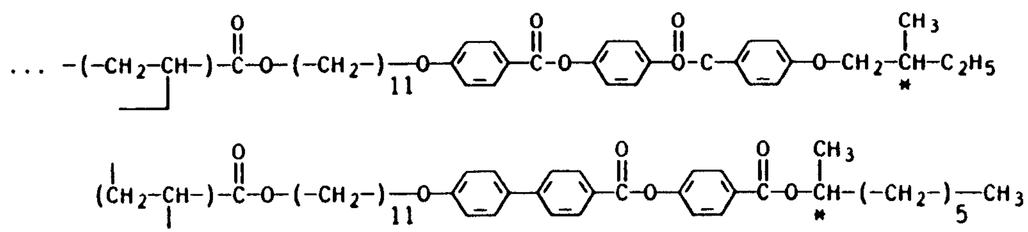<br>Molverhältnis 1 : 1<br>(THF) | 0,86-2,40 (m, al-H)<br>3,79-4,13 (m, $OCH_2$)<br>5,10-5,22 (m, OCH)<br>6,95-8,27 (m, ar-H) |

Forts. Tab. 2

| Bsp. | Verwendetes neues Monomer I Bezeichnung | (Co)Polymerisat Struktur (Lösungsmittel der (Co)Polymerisation) [Phasenübergangsverhalten (°C)] | 1H-NMR (δ in ppm) oder UV/VIS-Spektroskopie |
|---|---|---|---|
| 12 | I-12<br>I-1 | 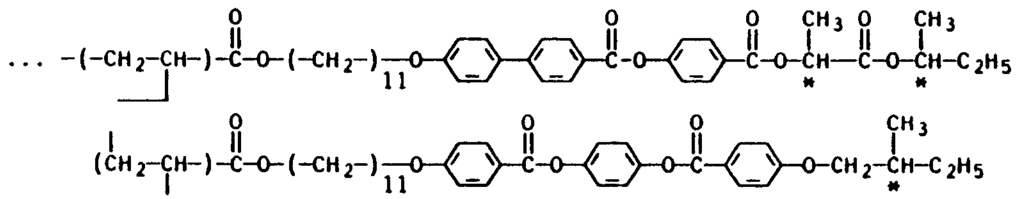<br>Molverhältnis 1 : 1<br>(THF) | 0,93-2,31 (m, al-H)<br>3,80-4,15 (m, $OCH_2$)<br>5,33-5,40 (q, OCH)<br>6,90-8,24 (m, ar-H) |
| 13 | I-9<br>I-1 | 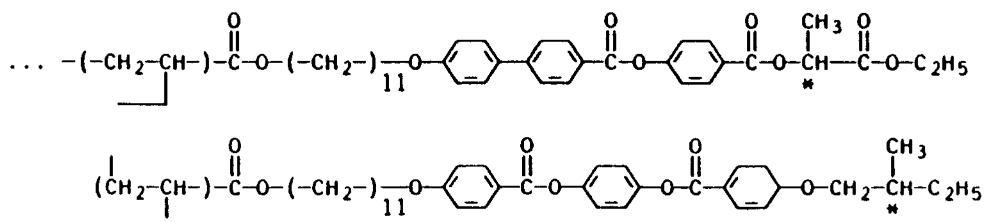<br>Molverhältnis 1 : 1<br>(DMF) | 0,96-2,10 (m, al-H)<br>3,83-4,27 (m, $OCH_2$)<br>5,28-5,38 (q, OCH)<br>6,96-8,24 (m, ar-H) |

Forts. Tab. 2

| Bsp. | Verwendetes neues Monomer I Bezeichnung | (Co)Polymerisat<br>Struktur<br>(Lösungsmittel der (Co)Polymerisation)<br>[Phasenübergangsverhalten (°C)] | 1H-NMR (δ in ppm) oder UV/VIS-Spektroskopie |
|---|---|---|---|
| 14 | I-1 | 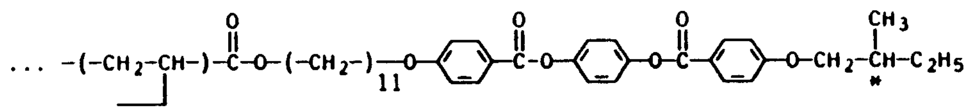 | UV/VIS: $\lambda_{max}$ ($CH_2Cl_2$) = 633 nm |
| | V1 | 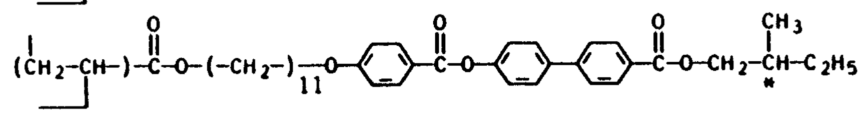 | Gehalt an dichroitischen Seitengruppen: 10 Gew.-% |
| | | 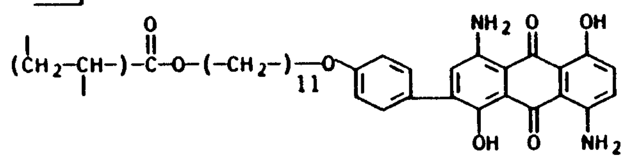 | |
| | | Molverhältnis I-1 : V1 1 : 1; Farbstoffcomonomer : 10 Gew.-%<br>(THF) | |
| Vergl. Vers. V6 | V1 | 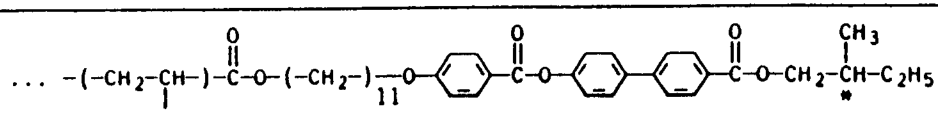<br>(Toluol)<br>[G 50 $S_C$* 138 $S_A$ 206 I] | 0,90-1,90 (m, al-H)<br>3,90-4,30 (m, 6H, $OCH_2$)<br>6,98-8,15 (m, 12 ar-H) |

Forts. Tab. 2

| Bsp. | Verwendetes neues Monomer I Bezeichnung | (Co)Polymerisat Struktur (Lösungsmittel der (Co)Polymerisation) [Phasenübergangsverhalten (°C)] | 1H-NMR (δ in ppm) oder UV/VIS-Spektroskopie |
|---|---|---|---|
| V7 | V3 | 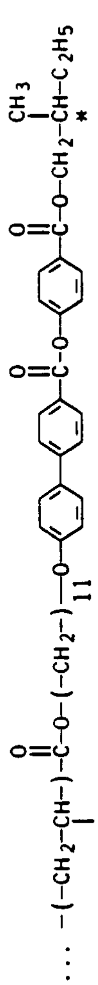 (THF) | 0,80-2,40 (m, al-H)<br>3,69-4,26 (m, 6H, $OCH_2$)<br>7,00-8,29 (m, 12 ar-H) |
| V8 | V5 | 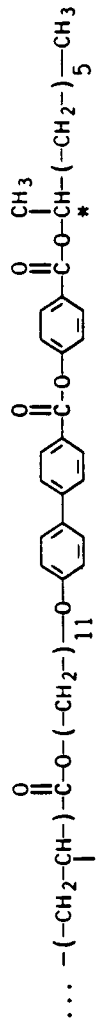 (THF) | 0,88-1,93 (m, al-H)<br>3,95-4,15 (m, 4H, $OCH_2$)<br>5,11-5,20 (m, 1H, OCH)<br>6,99-8,26 (m, 12 ar-H) |
| V9 | V4 | 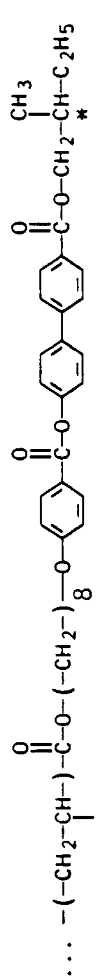 (THF) | 0,95-2,57 (m, al-H),<br>3,69-4,29 (m, 6H, $OCH_2$)<br>6,95-8,20 (m, 12 ar-H) |

Wie die Tabelle 2 zeigt, lassen sich die neuen Homo- und Copolymerisate mit chiralen mesogenen Seitengruppen ebenso einfach herstellen wie die vom Stand der Technik her bekannten. Zu ihrer Herstellung sind daher keine zusätzlichen technischen Maßnahmen zu treffen. Dies schafft einen zusätzlichen Anreiz, die bekannten Homopolymerisate durch die neuen Homo- und Copolymerisate P zu ersetzen, um sich so deren besondere anwendungstechnische Vorteile nutzbar zu machen.

So tritt beispielsweise bei den bekannten Homopolymerisaten keine oder nur eine monotrope $S_C^*$ -Phase auf, welche lediglich beim Abkühlen der bekannten Homopolymerisate erhältlich ist. Hierzu sei zu Vergleichszwecken desweiteren auf das Beispiel 14, Seite 64, oder das Beispiel 24, Seite 66, der EP-A-0 228 703 verwiesen, welche hier als Vergleichsversuche V10 und V11 herangezogen werden.

Häufig fehlt auch bei den bekannten Homopolymerisaten die N*-Phase, welche aus anwendungstechnischer Sicht von Bedeutung ist, weil sie die Orientierung der chiralen mesogenen Seitengruppen vereinfacht.

Außerdem haben die bekannten Homopolymerisate nicht das Phasenübergangsverhalten, wie es z.B. für ihre Verwendung in den Aufzeichnungsschichten (a) von laseroptischen Aufzeichnungselementen wünschenswert oder notwendig ist.

Überdies hinaus ist die für die laseroptische Datenaufzeichnung notwendige Schaltzeit $\tau$ (response time) bei den bekannten Homopolymerisaten zu lang. Auch hier sei z.B. auf die Vergleichsversuche V10 und V11 verwiesen (Beispiele 14 und 24 der EP-A-0 228 703), aus denen Schaltzeiten $\tau$ von 0,02 s oder 0,05 s hervorgehen, was indes noch immer um den Faktor 102 zu hoch ist.

Beispiele 15 und 16

Die Herstellung erfindungsgemäßer Aufzeichnungselemente und deren Verwendung für das wiederholte Schreiben, Lesen und Löschen digitaler Daten

Allgemeine Versuchsvorschrift:

Auf eine Planglasscheibe (BK7) der Abmessungen 40x30x3 mm wurden zunächst eine 0,7 $\mu$m dicke, leitfähige, transparente Elektrodenschicht aus Indium-Zinn-Oxid (ITO, R = 30 Ω/□) und hierauf wiederum eine 0,25 $\mu$m dicke $SiO_2$-Schicht in üblicher und bekannter Weise durch Sputtern aufgebracht.

Die $SiO_2$-Schicht und die ITO-Schicht wurden mit Hilfe der Photoresisttechnik bildmäßig abgeätzt, so daß eine Reliefstruktur mit quadratischer ITO-Elektrode und mit der entsprechenden Stromzufuhr resultierte. Hierbei wurde als Photoresist der Negativresist Nylotron® WV 0138 X der Firma BASF AG verwendet. Das Wegätzen erfolgte mit Hilfe einer Ätzlösung aus 268 g $FeCl_2.4H_2O$, 24 g $SnCl_2.2H_2O$, 450 ml 37%iger HCl und 415 ml Wasser. Zum Strippen des verbliebenen Photoresists wurde 3%ige wäßrige Kalilauge verwendet.

Im Anschluß daran wurde auf die Oberfläche der resultierenden Anordnung eine Orientierungsschicht aus angeriebenem Polyimid durch Aufschleudern einer 3%igen Lösung eines Polyimidvorläufers (Liquicoat® ZLI 2650 der Firma Merck AG), Trocknen der resultierenden Naßschicht, 4-stündigem Backen der Polyimidvorläufer-Schicht bei 300 °C und Anreiben der so erhaltenen Polyimidschicht mit einem Velourstuch aufgebracht.

Zur Herstellung des erfindungsgemäßen Aufzeichnungselements wurden im Bereich der quadratischen ITO-Elektrode auf die Oberfläche der Orientierungsschicht 5 bis 10 mg eines neuen Homopolymerisats P oder eines neuen Copolymerisats P mit chiralen mesogenen Seitengruppen aufgetragen. Hierzu wurde die Anordnung aus Planglasscheibe, ITO-Elektrodenrelief und Orientierungsschicht auf 10 °C oberhalb der Klärtemperatur des betreffenden neuen (Co)Polymerisats P aufgeheizt.

Hiernach wurde der Bereich um das ITO-Elektrodenrelief mit einer hochtemperaturbeständigen Polyimidspacerfolie abgedeckt und die gesamte hierbei resultierende Anordnung aus Planglasscheibe, ITO-Elektrodenrelief, Orientierungsschicht, geschmolzenem neuen (Co)Polymerisat P und Spacerfolie mit einer zweiten 10 °C über den Klärpunkt des betreffenden neuen (Co)Polymerisats P erhitzten, deckungsgleichen Anordnung aus Planglasscheibe, ITO-Elektrodenrelief und Orientierungsschicht bedeckt, so daß ein paralleler Plattenkondensator resultierte, in welchem das geschmolzene neue (Co)Polymerisat P eingeschlossen war.

Diese Sandwich-Anordnung wurde während bis 2 Stunden in einer mechanischen Folienpresse bei einer Temperatur von 10 °C oberhalb der Klärtemperatur des betreffenden neuen (Co)Polymerisats P verpreßt, wodurch das erfindungsgemäße Aufzeichnungselement mit einer 0,1 $\mu$m dicken neuen Aufzeichnungsschicht (a) resultierte.

Die Schaltzeiten $\tau$ (response time) des erfindungsgemäßen Aufzeichnungselements wurden anhand der zeitlichen Änderung seiner polarisationsoptischen Eigenschaften beim Wechsel der angelegten Gleichspannung von +U(V) nach -U(V) bestimmt.

Hierzu wurde die zeitliche Änderung der Transmission eines HeNe-Laserstrahls ($\lambda$ = 633 nm) gemessen, wenn sich die neue Aufzeichnungsschicht (a) zwischen zwei gekreuzten Polarisatoren befand, wobei die Achse des Tiltwinkels $\Theta$ des betreffenden neuen (Co)Polymerisats P vor dem Schaltvorgang [angelegte Spannung: +U(V)] unter einem Winkel von 45° zu den Polarisatoren stand, was die maximale

Transmission der neuen Aufzeichnungsschicht (a) gewährleistete.

Die Schaltzeit $\tau$ wurde dann als diejenige Zeit ermittelt, in welcher sich die Transmission des durch die neue Aufzeichnungsschicht (a) hindurchgestrahlten Laserstrahls nach dem Umschaltvorgang von +U(V) nach -U(V) von 90 % des Transmissionskontrasts auf 10 % dieses Kontrasts änderte.

Der Tiltwinkel $\Theta$ des betreffenden neuen (Co)Polymerisats P in der neuen Aufzeichnungsschicht (a) wurde in üblicher und bekannter weise polarisationsmikroskopisch gemessen.

Für die Bestimmung der ferroelektrischen Spontanpolarisation $P_s$ bzw. der Dipoldichte oder der Summe der ausgerichteten Dipolmomente pro Volumeneinheit der Aufzeichnungsschicht (a) wurde die übliche und bekannte Dreiecks-Methode angewandt. Hierzu wurde an die ITO-Elektroden des erfindungsgemäßen Aufzeichnungselements eine periodische Dreiecksspannung einer Frequenz von 20 Hz mit einer Spannungsspitze (Peak-Spannung) von ± 20 V angelegt und gleichzeitig der durch das erfindungsgemäße Aufzeichnungselement fließende Strom zeitabhängig registriert. Aus den gemessenen Werten für den Gesamtstrom I (t), dem kapazitiven Strom und dem Ohmschen Strom wurde dann der Spontanpolarisationsstrom ermittelt und hieraus die ferroelektrische Spontanpolarisation $P_s$ ($nC/cm^2$) errechnet.

Beispiele 15

Für das Beispiel 15 wurde das aus dem neuen Monomeren I-13 hergestellte neue Homopolymerisat P9 des Beispiels 7 verwendet.

Die hieraus bestehende neue Aufzeichnungsschicht (a) wies in ihrem $S_c^*$-Ordnungszustand bei 116 °C einen Tiltwinkel $\Theta$ von $\alpha$ = ± 20,5 ° und eine ferroelektrische Spontanpolarisation $P_s$ von 29,9 $nC/cm^2$ auf. Bei 127 °C, d.h. 1 °C unterhalb des Phasenübergangs $S_c^* \leftrightarrows S_A$, lag ihre Schaltzeit $\tau$ bei einem Spannungswechsel von +18 V nach -18 V bei 45 $\mu$s.

Die neue Aufzeichnungsschicht (a) konnte daher im Temperaturbereich ihrer $S_c^*$-Phase problemlos ganzflächig oder punktuell durch Anlegen von Gleichspannung zwischen zwei thermodynamisch stabilen $S_c^*$-Ordnungszuständen hin- und hergeschaltet werden. Das erfindungsgemäße Aufzeichnungselement war daher hervorragend für das wiederholte Schreiben, Lesen und Löschen von Daten mit Hilfe von Laserstrahlen geeignet.

Beispiel 16

Für das Beispiel 16 wurde das aus den neuen Monomeren I-1 und I-13 sowie aus dem bekannten Comonomeren VI hergestellte neue Copolymerisat P des Beispiels 9 verwendet.

Die hieraus bestehende neue Aufzeichnungsschicht (a) wies bei einer Temperatur von 126 °C bei einem Spannungswechsel von +18 V nach -18 V eine Schaltzeit $\tau$ von 101 $\mu$s auf und konnte ebenfalls problemlos ganzflächig oder punktuell zwischen zwei thermodynamisch stabilen Zuständen hin- und hergeschaltet werden. Das erfindungsgemäße Aufzeichnungselement war deshalb gleichfalls hervorragend für das wiederholte Schreiben, Lesen und Löschen von Daten mit Hilfe von Laserstrahlen geeignet.

## Patentansprüche

**1.** Monomeren der allgemeinen Formel I

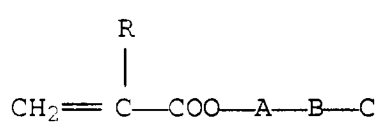

worin die Variablen die folgende Bedeutung haben:

R Wasserstoff, Chlor oder eine Methylgruppe,

A flexibler, abstandhaltender Molekülteil,

C

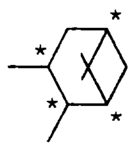, 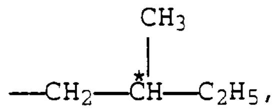 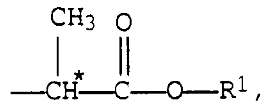

wobei

$R^1$ eine geradkettige oder verzweigte, chirale oder achirale Alkylgruppe mit 1 bis 4 C-Atomen ist,

B

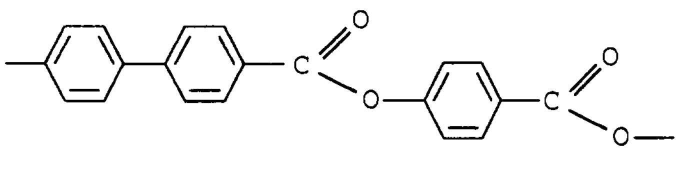

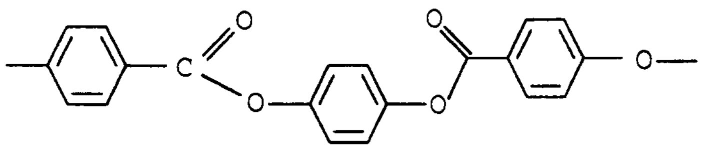

wobei wenn C

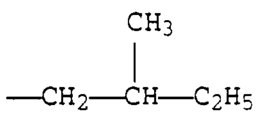

ist, kann B nicht

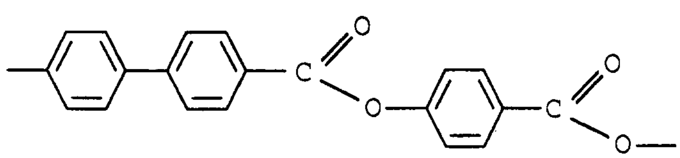

sein.

2. Verwendung der Monomeren I gemäß Anspruch 1 in niedermolekularen mesogenen Materialien.

3. Verwendung der Monomeren I gemäß Anspruch 1 für die Herstellung von Polymerisaten mit chiralen mesogenen Seitengruppen, welche ferroelektrisches smektisch flüssigkristallines Verhalten zeigen.

4. Polymerisate mit chiralen mesogenen Seitengruppen, welche ferroelektrisches smektisch flüssigkristallines Verhalten zeigen, dadurch gekennzeichnet, daß sie mindestens eines der Monomeren I gemäß Anspruch 1 einpolymerisiert enthalten.

5. Polymerisate nach Anspruch 4, dadurch gekennzeichnet, daß sie an sich bekannte mesogene Seitengruppen mit flüssigkristallinem Verhalten aufweisen.

6. Polymerisate nach Anspruch 4, dadurch gekennzeichnet, daß sie Seitengruppen mit dichroitischen Chromophoren enthalten.

**7.** Wiederholt löschbares und beschreibbares laseroptisches Aufzeichnungselement, enthaltend

a) eine Aufzeichnungsschicht mit enantiotropem, ferroelektrischem smektisch flüssigkristallinem ($S_{C^*}$) Verhalten, die beim Bestrahlen mit einem Laserstrahl ausreichender Lichtleistung durch Anlegen eines äußeren elektrischen Feldes zwischen zwei thermodynamisch stabilen, optisch unterscheidbaren ferroelektrischen smektisch flüssigkristallinen $S_{C^*}$-Ordnungszuständen hin- und hergeschaltet werden kann,

dadurch gekennzeichnet, daß die Aufzeichnungsschicht (a) mindestens ein Polymerisat gemäß einem der Ansprüche 4 bis 6 enthält oder aus mindestens einem dieser Polymerisate besteht.

**8.** Wiederholt löschbares und beschreibbares laseroptisches Aufzeichnungselement nach Anspruch 7, dadurch gekennzeichnet, daß die Dicke d der Aufzeichnungsschicht (a) bei 0,1 bis 5 $\mu$m liegt.

**9.** Wiederholt löschbares und beschreibbares laseroptisches Aufzeichnungselement nach Anspruch 7, dadurch gekennzeichnet, daß die Schaltzeit $\tau$, welche für das Umschalten der Aufzeichnungsschicht (a) von einem thermodynamisch stabilen, ferroelektrischen smektisch flüssigkristallinen $S_{C^*}$-Ordnungszustand zum anderen notwendig ist, bei Temperaturen oberhalb der Raumtemperatur unterhalb 1 ms liegt.

**10.** Wiederholt löschbares und beschreibbares laseroptisches Aufzeichnungselement nach Anspruch 8 und 9, dadurch gekennzeichnet, daß die Schaltzeit $\tau$ bei einer Temperatur, welche 1 °C unterhalb des Phasenübergangs $S_C^* \rightarrow S_A^*$ liegt, kleiner als 100 $\mu$s ist.

**11.** Verfahren für das wiederholte Schreiben, Lesen und Löschen von Daten, bei welchem man in die ferroelektrische smektisch flüssigkristalline ($S_C^*$ ) Aufzeichnungsschicht (a) eines laseroptischen Aufzeichnungselements

(1) die digitalen oder die analogen Daten mit Hilfe eines Schreiblaserstrahls ausreichender Lichtleistung ggf. unter Anlegen eines äußeren elektrischen Feldes in der Form von optisch nachweisbaren, bei Raumtemperatur stabilen Bereichen einschreibt, die ferroelektrische smektisch flüssigkristalline $S_C^*$ -Phasen, smektisch flüssigkristalline $S_A^*$ -Phasen, ungeordnete Mikrodomänen (Steuerzentren) oder isotrope I-Phasen sind,

(2) die eingeschriebenen Daten oder Bereiche mit Hilfe eines Leselaserstrahls über den Doppelbrechungskontrast, den Dichroismuskontrast, die Lichtstreuung an Streuzentren und/oder die Interferenz reflektierter Laserlichtwellen unterschiedlicher Phasengeschwindigkeit detektiert, wobei man das von dem Aufzeichnungselement reflektierte Licht analysiert und in Signale umwandelt, wonach man

(3) die eingeschriebenen Daten oder Bereiche insgesamt oder sektorweise durch vollflächiges oder sektorweises Erwärmen der beschriebenen Aufzeichnungsschicht (a) in einem äußeren elektrischen Feld wieder löschen und

(4) die Verfahrensschritte (1) und (2) wiederholen kann,

dadurch gekennzeichnet, daß man hierbei ein laseroptisches Aufzeichnungselement gemäß einem der Ansprüche 7 bis 10 verwendet.

**12.** Das Verfahren nach Anspruch 11, dadurch gekennzeichnet, daß man hierbei das laseroptische Aufzeichnungsmaterial gemäß einem der Ansprüche 1 bis 6 in der Form einer runden Scheibe (Disk) und ein Plattenlaufwerk mit einem beweglichen laseroptischen Schreib- und Lesekopf verwendet.

## Claims

**1.** A monomer of the formula I

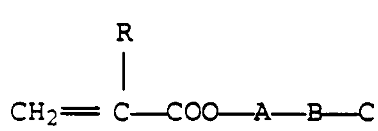

where

R is hydrogen, chlorine or methyl,

A is a flexible, space-maintaining molecular moiety,

C is

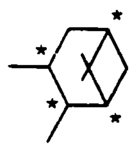 , 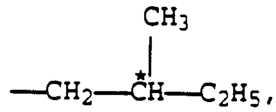 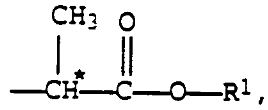

where

$R^1$ is a straight-chain or branched, chiral or achiral alkyl group of 1 to 4 carbon atoms,

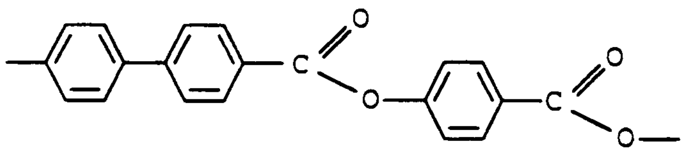

B is

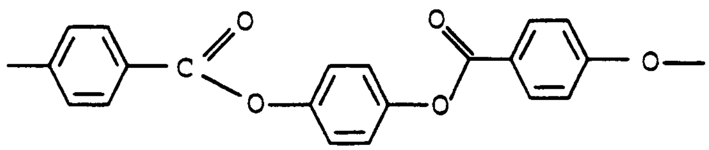

and, if C is

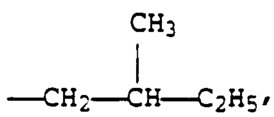

B cannot be

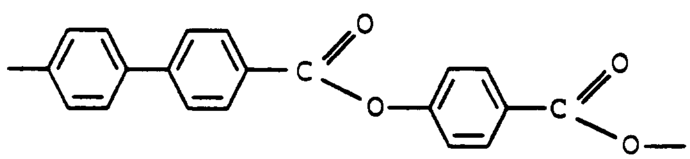

**2.** A method of using the monomers I as claimed in claim 1 in low molecular weight mesogenic materials.

**3.** A method of using the monomers I as claimed in claim 1 for the preparation of polymers having chiral mesogenic side groups which exhibit ferroelectric smectic liquid crystalline behavior.

**4.** A polymer having chiral mesogenic side groups which exhibit ferroelectric smectic liquid crystalline behavior, wherein the said polymer contains one or more of the monomers I as claimed in claim 1 as polymerized units.

**5.** A polymer as claimed in claim 4, which has mesogenic side groups known per se and exhibiting livid crystalline behavior.

**6.** A polymer as claimed in claim 4, which contains side groups having dicroitic chromophores.

**7.** A repeatedly erasable and recordable laser-optical recording element, containing
a) a recording layer which exhibits an enantiotropic, ferroelectric smectic liquid crystalline ($S_{C*}$) behavior and can be switched back and forth between two thermodynamically stable, optically distinguishable ferroelectric smectic liquid crystalline $S_{C*}$ order states on exposure to a laser beam of sufficient luminous power by applying an external electric field,
wherein the recording layer (a) contains at least one polymer as claimed in claim 4 or consists of one or more of these polymers.

**8.** A repeatedly erasable and recordable laser-optical recording element as claimed in claim 7, wherein the thickness d of the recording layer (a) is from 0.1 to 5 $\mu$m.

**9.** A repeatedly erasable and recordable laser-optical recording element as claimed in claim 7, wherein the switching time $\tau$ which is required for switching the recording layer (a) from one thermodynamically stable, ferroelectric smectic liquid crystalline $S_{c*}$ order state to the other is less than 1 ms at above room temperature.

**10.** A repeatedly erasable and recordable laser-optical recording element as claimed in claims 8 and 9, wherein the switching time $\tau$ at 1 °C below the phase transition $\underline{S}_{c*} \rightarrow \underline{S}_{A*}$ is less than 100 $\mu$s.

**11.** A method for repeated recording, reading and erasing of data, in which, in the ferroelectric smectic liquid crystalline ($S_{C*}$) recording layer (a) of a laser-optical recording element,
(1) the digital or the analog data are recorded with the aid of a write laser beam of sufficient luminous power, if necessary with the application of an external electric field, in the form of optically detectable regions which are stable at room temperature and are ferroelectric smectic liquid crystalline $S_{C*}$ phases, smectic liquid crystalline $S_{A*}$ phases, disordered microdomains (scattering centers) or isotropic I phases,
(2) the recorded data or regions are detected with the aid of a read laser beam by means of the birefringence contrast, the dichroic contrast, light scattering at scattering centers and/or interference of reflected laser light waves of different phase velocities, the light reflected by the recording element being analyzed and converted into signals, and then
(3) the recorded data or regions are erased completely or sector by sector by heating the entire surface or individual sectors of the recording layer (a) described, in an external electric field and
(4) process steps (1) and (2) may be repeated,
wherein a laser-optical recording element as claimed in any of claims 7 to 10 is used.

**12.** The method as claimed in claim 11, wherein the laser-optical recording material as claimed in one of claims 1 to 6 in the form of a circular disk and a disk drive having a movable laser-optical write and read head are used.

## Revendications

**1.** Monomères de formule générale I :

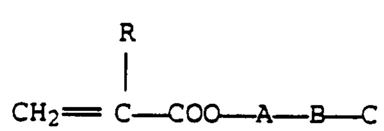

dans laquelle les variables ont les significations suivantes :
R représente un atome d'hydrogène ou de chlore ou un groupe méthyle,
A représente une fraction de molécule flexible maintenant l'écartement,
C représente

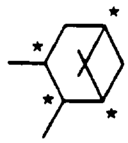 , 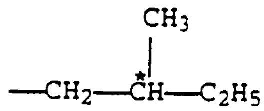 , 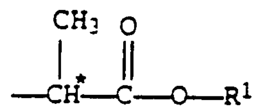 ,

où
$R^1$ représente un groupe alkyle linéaire ou ramifié, chiral ou achiral ayant de 1 à 4 atomes de carbone,
B représente

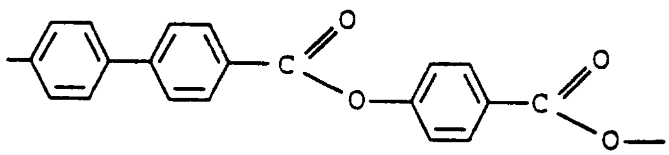

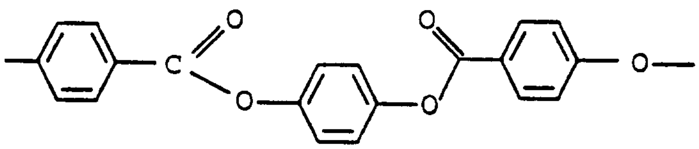

où, si C est

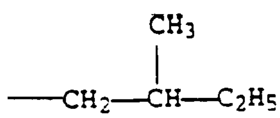

B ne peut pas être

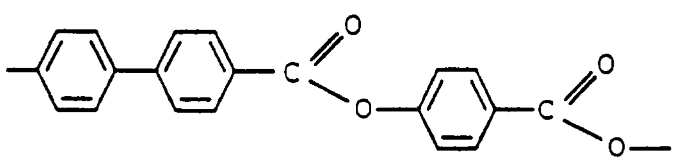

2. Utilisation des monomères I selon la revendication 1, dans des matériaux mésogènes à faible poids moléculaire.

3. Utilisation des monomères I selon la revendication 1 pour la préparation de polymères à groupes latéraux mésogènes chiraux, qui présentent un comportement de cristaux liquides smectiques ferroélectriques.

4. Polymères à groupes latéraux mésogènes chiraux qui présentent un comportement de cristaux liquides smectiques ferroélectriques, caractérisés en ce qu'ils contiennent, incorporé à leur chaîne polymérique, au moins l'un des monomères I selon la revendication 1.

5. Polymères selon la revendication 4, caractérisés en ce qu'ils présentent des groupes latéraux mésogènes connus en soi à comportement de cristaux liquides.

**6.** Polymères selon la revendication 4, caractérisés en ce qu'ils contiennent des groupes latéraux avec des chromophores dichroïtiques.

**7.** Elément d'enregistrement optique à laser effaçable et imprimable à répétition, contenant :
a) une couche d'enregistrement à comportement ($S_{C^*}$) de cristaux liquides smectiques ferroélectriques énantiotrope qui peut être commutée et recommutée par irradiation par un rayon laser de puissance lumineuse suffisante par application d'un champ électrique extérieur entre deux états d'arrangement $S_{C^*}$ à cristal liquide smectique ferroélectrique différenciables optiquement et thermodynamiquement stables,
caractérisé en ce que la couche d'enregistrement (a) contient au moins un polymère selon la revendication 4 ou est constituée d'au moins l'un de ces polymères.

**8.** Elément d'enregistrement optique à laser effaçable et imprimable à répétition selon la revendication 7, caractérisé en ce que l'épaisseur d de la couche d'enregistrement (a) est comprise entre 0,1 et 5 $\mu$m.

**9.** Elément d'enregistrement optique à laser effaçable et imprimable à répétition selon la revendication 7, caractérisé en ce que le temps de commutation $\tau$ qui est nécessaire à la commutation de la couche d'enregistrement (a) d'un état d'arrangement $S_{C^*}$ à cristal liquide smectique ferroélectrique thermodynamiquement stable à un autre état est inférieur à 1 ms à des températures supérieures à la température ambiante.

**10.** Elément d'enregistrement optique à laser effaçable et imprimable à répétition selon les revendications 8 et 9, caractérisé en ce que le temps de commutation $\tau$ est inférieur à 100 $\mu$s à une température inférieure de 1 °C à la température de transition des phases $S_{\underline{C}^*} \rightarrow S_{\underline{A}^*}$.

**11.** Procédé pour l'enregistrement, la lecture et l'effacement à répétition de données dans lequel, dans la couche d'enregistrement (a) ($S_{\underline{C}^*}$) à cristal liquide smectique ferroélectrique d'un élément d'enregistrement optique à laser
(1) les données numériques ou analogiques sont enregistrées à l'aide d'un rayon laser d'enregistrement de puissance lumineuse suffisante, éventuellement avec application d'un champ électrique extérieur sous la forme de régions optiquement détectables et stables à température ambiante, qui sont des phases $S_{\underline{C}^*}$ à cristal liquide smectique ferroélectrique, des phases $S_{\underline{A}^*}$ à cristal liquide smectique, des microdomaines non ordonnés (centres de diffusion) ou des phases isotropes,
(2) les données ou les domaines enregistrés sont détectés à l'aide d'un rayon laser de lecture par contraste de double réfraction, contraste de dichroïsme, diffusion de la lumière aux centres de diffusion et/ou interférence des ondes lumineuses laser réfléchies ayant différentes vitesses de phase avec analyse de la lumière réfléchie par l'élément d'enregistrement et sa transformation en signaux, puis
(3) les données ou domaines enregistrés sont effacés à nouveau en totalité ou par secteur par chauffage de toute la surface ou par secteur de la couche d'enregistrement (a) enregistrée dans un champ électrique extérieur, et
(4) les étapes de procédé (1) et (2) peuvent être répétées,
caractérisé en ce que l'on utilise à cet effet un élément d'enregistrement optique à laser selon l'une des revendications 7 à 10.

**12.** Procédé selon la revendication 11, caractérisé en ce que l'on utilise le matériau d'enregistrement optique à laser selon l'une des revendications 1 à 6 sous la forme d'une plaque ronde (disque) et d'un lecteur de disque, avec une tête mobile d'enregistrement et de lecture optique à laser.